(19) **Europäisches Patentamt / European Patent Office / Office européen des brevets**

(11) **EP 4 663 607 A1**

(12) **EUROPEAN PATENT APPLICATION**
published in accordance with Art. 153(4) EPC

(43) Date of publication:
**17.12.2025  Bulletin 2025/51**

(21) Application number: **23933476.6**

(22) Date of filing: **20.04.2023**

(51) International Patent Classification (IPC):
***C01G 53/04*** (2025.01)

(52) Cooperative Patent Classification (CPC):
**C01G 53/504; C01G 53/50; C01G 53/82;**
C01P 2002/72; C01P 2004/51; C01P 2004/61;
C01P 2006/12; C01P 2006/14; C01P 2006/40;
Y02E 60/10

(86) International application number:
**PCT/CN2023/089600**

(87) International publication number:
**WO 2024/216600 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
• **SHEN, Chongheng**
  **Ningde, Fujian 352100 (CN)**

• **HUAN, Shuxing**
  **Ningde, Fujian 352100 (CN)**
• **WU, Changxu**
  **Ningde, Fujian 352100 (CN)**
• **CHEN, Qiang**
  **Ningde, Fujian 352100 (CN)**
• **LIU, Na**
  **Ningde, Fujian 352100 (CN)**

(74) Representative: **Gong, Jinping**
  **CocreateIP**
  **Neumarkter Straße 21**
  **81673 München (DE)**

(54) **PRECURSOR MATERIAL AND PREPARATION METHOD THEREFOR, POSITIVE ELECTRODE MATERIAL, POSITIVE ELECTRODE SHEET, SECONDARY BATTERY, AND ELECTRONIC DEVICE**

(57)    The present application provides a precursor material and a preparation method therefor, a positive electrode material, a secondary battery, and a power consuming apparatus. The precursor material has a chemical formula of $Ni_xCo_yMn_zM_a(OH)_2$, where element M includes at least one of Zr, Y, Al, Ti, W, Sr, Ta, Mo, Sb, Nb, Na, K, Ca, Ce, and La, $0.55 \leq x < 1.0$, $0 \leq y < 0.45$, $0 \leq z < 0.45$, $0 < a \leq 0.45$, $a+x+y+z=1$, and the precursor material includes 20-70 layers of (101) plane.

**5**

FIG. 1

**Description**

**TECHNICAL FIELD**

The present application relates to the technical field of secondary batteries, and in particular, to a precursor material and a preparation method therefor, a positive electrode material, a positive electrode sheet, a secondary battery, and a power consuming apparatus.

**BACKGROUND**

In recent years, secondary batteries have found wide use in energy storage power source systems such as hydropower, thermal power, wind power and solar power stations, as well as in power tools, electric bicycles, electric motorcycles, electric vehicles, military equipment, aerospace and other fields.

The performance of a positive electrode material has a key impact on the performance of the secondary batteries, and the performance of the positive electrode material is greatly affected by the performance of a precursor material. The positive electrode material synthesized with an existing precursor material has a relatively high capacity, but a relatively poor cycle performance, or a relatively high cycle performance, but a relatively low capacity. Consequently, the positive electrode material does not have good comprehensive electrochemical performances and cannot meet the requirements during use of the new generation of electrochemical systems.

**SUMMARY**

In view of the foregoing problems, the present application is accomplished. The present application provides a precursor material, to improve the capacity of a battery and reduce the direct current internal resistance of the battery, and further improve the high-temperature cycle performance of the battery.

A first aspect of the present application provides a precursor material, having a chemical formula of $Ni_xCo_yMn_zM_a(OH)_2$,

where element M includes at least one of Zr, Y, Al, Ti, W, Sr, Ta, Mo, Sb, Nb, Na, K, Ca, Ce, and La, $0.55{\le}x<1.0$, $0{\le}y<0.45$, $0{\le}z<0.45$, $0<a{\le}0.45$, $a+x+y+z=1$, and the precursor material includes 20-70 layers of (101) planes.

When the number of layers of the (101) planes of the precursor material is in a suitable range, the positive electrode material prepared therewith has more active-lithium-ion crystal planes, to expose a large number of active sites of lithium ions, improve the gravimetric capacity of the positive electrode material, and improve the capacity of the battery. Moreover, the (101) plane, as a dominant crystal plane for lithium ion transmission, can structurally shorten the transmission distance of lithium ions, reduce the direct current internal resistance of the battery, and improve the dynamic performance of the battery. In addition, when the number of layers of the (101) planes of the precursor material is in a suitable range, the positive electrode material prepared therewith has excellent structural stability, thus improving the high-temperature cycle performance of the battery.

In any embodiment, in the chemical formula $Ni_xCo_yMn_zM_a(OH)_2$, $0.90{\le}x<1.0$, $0{\le}y<0.10$, $0{\le}z<0.10$, $0<a{\le}0.10$, and $a+x+y+z=1$.

In any embodiment, the number of layers of the (101) planes of the precursor material is 25-55.

By controlling the number of layers of the crystal planes of the precursor material in the range of 25-55, the capacity of the battery can be further improved and the direct current internal resistance of the battery is reduced.

In any embodiment, the deformation fault probability fD of the precursor material is less than or equal to 7.0%, and optionally less than or equal to 4.0%.

When the precursor material has a small deformation fault probability fD, a coordination atom in a tetrahedron center can be greatly stabilized, the formation of vacancies is inhibited, the stability of the actual stoichiometric ratio and the valence of a transition metal is promoted, and the orderliness and structural stability of the positive electrode material prepared with the precursor material are improved, thus improving the high-temperature cycle performance of the secondary battery.

In any embodiment, the ratio of grain sizes of the (100) plane to (001) plane of the precursor material is greater than or equal to 2.0, and optionally greater than or equal to 4.4.

By controlling the ratio of grain sizes of the (100) plane to (001) plane in a suitable range, the deformation fault probability fD of the precursor material can be controlled in a suitable range, and the structural stability of the positive electrode material prepared therewith is improved, thus improving the high-temperature cycle performance of the secondary battery.

In any embodiment, a pore volume of the precursor material is greater than or equal to 0.02 $cm^3/g$, and optionally greater than or equal to 0.025 $cm^3/g$.

By adjusting the pore volume of the precursor material to be greater than or equal to 0.02 $cm^3/g$, the precursor

material is properly loose and abundantly porous, thus facilitating the lithium ion diffusion and improving the capacity of the battery in the process of preparing the positive electrode material.

In any embodiment, a Dv50 of the precursor material is 3 $\mu$m-15 $\mu$m.

By controlling the Dv50 of the precursor material in a suitable range, the transmission distance of lithium ions can be shortened, and the direct current internal resistance of the battery is reduced. Moreover, when the precursor material has a suitable Dv50, the positive electrode material prepared therewith has more reactive sites of lithium ions, thus improving the gravimetric capacity of the positive electrode material and improving the capacity of the battery.

In any embodiment, a specific surface area of the precursor material is 4 $m^2$/g-20$m^2$/g, and optionally 8 $m^2$/g-13$m^2$/g.

When the specific surface area of the precursor material is in a suitable range, the positive electrode material prepared therewith has a large number of active reaction sites of lithium ions, thus improving the capacity of the battery.

In any embodiment, an intensity ratio of diffraction peaks of the (001) plane and (101) plane of the precursor material is 0.60-1.25, and optionally 0.9-1.18.

By controlling the intensity ratio of diffraction peaks of the (001) plane and (101) plane of the precursor material in a suitable range, the precursor material has a good degree of crystal plane orientation, the positive electrode material prepared therewith has a high ion orderliness, and the battery has a high capacity and an excellent cycle performance.

A second aspect of the present application provides a method for preparing a precursor material. The preparation method includes the following steps:

preparing a precursor material by a co-precipitation reaction, where the precursor material has a chemical formula of $Ni_xCo_yMn_zM_a(OH)_2$,

where element M includes at least one of Zr, Y, Al, Ti, W, Sr, Ta, Mo, Sb, Nb, Na, K, Ca, Ce, and La, $0.55 \leq x < 1.0$, $0 \leq y < 0.45$, $0 \leq z < 0.45$, $0 < a \leq 0.45$, $a+x+y+z=1$, and the precursor material includes 20-70 layers of (101) planes.

By adopting the preparation method provided in the present application, a precursor material with 20-70 layers of (101) planes can be obtained, which can improve the capacity of the battery, reduce the direct current internal resistance of the battery, and improve the high-temperature cycle performance of the battery.

In any embodiment, the preparation method specifically includes Steps (1) and (2):

Step (1): con-currently adding a mixed salt solution containing a nickel salt, a cobalt salt and a manganese salt, a precipitant solution, a complexing agent solution and a surfactant into a base reaction solution, carrying out a first co-precipitation reaction, and stopping the reaction after a first target particle size Dv50 is achieved, to obtain a precursor mother liquor; and

Step (2): parallely adding a precipitant solution, a complexing agent solution and an M salt solution into the precursor mother liquor, carrying out a second co-precipitation reaction, and stopping the reaction after a second target particle size Dv50 is achieved, to obtain the precursor material.

By the preparation of the precursor material by two-stage co-precipitation reactions, the growth rate of the crystal can be adjusted, the crystal plane orientation of crystal growth can be effectively controlled, and the number of layers of the (101) plane is enabled to be in a suitable range. In addition, by adding a surfactant in Step (1) to inhibit the growth of the (001) plane, the (101) plane is enabled to grow in order, to expose more dominant surfaces for lithium ion transmission, reduce the direct current internal resistance of the battery and improve the rate performance of the battery. By adding element M in Step (2), flaky primary particles are advantageously generated, the growth of the (101) plane is promoted, to obtain a precursor material with a controllable number of layers of (101) planes. Thus, a positive electrode material with a controllable number of layers of (101) planes can be obtained.

In any embodiment, the content in percentage by weight of the surfactant added in Step (1) is 0.1%-5%, based on the total weight of the nickel salt, the cobalt salt and the manganese salt in the mixed salt solution.

In any embodiment, the surfactant added in Step (1) has a hydrophile-lipophile balance value of greater than 10, and optionally includes one or more of polyvinylpyrrolidone, triethanolamine oleate, polyoxyethylene oleyl ether, or polyoxyethylene lauryl ether.

By adding a surfactant having a hydrophile-lipophile balance value of greater than 10 in Step (1), the growth of the (001) plane is inhibited, and the ordered growth of the (101) plane is promoted. By controlling the content in percentage by weight of the surfactant added, the number of layers of the (101) planes and the aspect ratio of primary particles of the positive electrode material can be adjusted to some extent, and the capacity of the secondary battery is improved.

In any embodiment, the first target particle size Dv50 in Step (1) is 3 $\mu$m-9.5 $\mu$m, and the second target particle size Dv50 in Step (2) is 3 $\mu$m-15 $\mu$m.

By controlling the first target particle size Dv50 in Step (1) in a suitable range, the second target particle size Dv50 can be advantageously adjusted to be in a suitable range, whereby the Dv50 of the precursor material is adjusted to be in a suitable range, to further improve the capacity and reduce the direct current internal resistance of the battery.

In any embodiment, the reaction temperature of the first co-precipitation reaction in Step (1) is 65-85°C, and the reaction temperature of the second co-precipitation reaction in Step (2) is 65-85°C.

By appropriately controlling the reaction temperatures of the first co-precipitation reaction and the second co-precipitation reaction, the first co-precipitation reaction and the second co-precipitation reaction are more stable and efficient, and the subsequently obtained precursor material and positive electrode material have better structural properties, thereby improving the capacity of the battery, reducing the direct current internal resistance of the battery, and improving the high-temperature cycle performance of the battery.

In any embodiment, the pH value of the first co-precipitation reaction in Step (1) is 8.5-11.5, and the pH value of the second co-precipitation reaction in Step (2) is 8.5-11.5.

By appropriately controlling the pH values of the first co-precipitation reaction and the second co-precipitation reaction, the first co-precipitation reaction and the second co-precipitation reaction are more stable and efficient, and the subsequently obtained precursor material and positive electrode material have better structural properties, thereby improving the capacity of the battery, reducing the direct current internal resistance of the battery, and improving the high-temperature cycle performance of the battery.

In any embodiment, the molar concentration of the complexing agent in the first co-precipitation reaction system in Step (1) is 0.5-1 mol/L, and the molar concentration of the complexing agent in the second co-precipitation reaction system in Step (2) is 0.5-1 mol/L.

By appropriately controlling the molar concentrations of the complexing agent in the first co-precipitation reaction and the second co-precipitation reaction, the first co-precipitation reaction and the second co-precipitation reaction are more stable and efficient, and the subsequently obtained precursor material and positive electrode material have better structural properties, thereby improving the capacity of the battery, reducing the direct current internal resistance of the battery, and improving the high-temperature cycle performance of the battery.

In any embodiment, the molar concentration of the mixed salt solution added in Step (1) is 1-5 mol/L; the molar concentration of the precipitant solution added in Step (1) is 1-10 mol/L; the molar concentration of the precipitant solution added in Step (2) is 1-10 mol/L; and the molar concentration of the M salt solution in Step (2) is 0.5-1 mol/L.

By controlling the molar concentrations of the precipitant, the mixed salt solution, and the M salt solution in the first co-precipitation reaction and the second co-precipitation reaction in suitable ranges, the first co-precipitation reaction and the second co-precipitation reaction are more stable and efficient, and the subsequently obtained precursor material and positive electrode material have better structural properties, thereby improving the capacity of the battery, reducing the direct current internal resistance of the battery, and improving the high-temperature cycle performance of the battery.

A third aspect of the present application provides use of the precursor material described in the present application or the precursor material prepared by the preparation method described in the present application in the preparation of a positive electrode material.

A fourth aspect of the present application provides a positive electrode material, which is prepared with the precursor material described in the present application or the precursor material prepared by the preparation method described in the present application.

The positive electrode material prepared with the precursor material according to the first aspect or the precursor material prepared by the preparation method according to the second aspect has a high gravimetic capacity, can also reduce the direct current internal resistance of the battery, and the improve the high-temperature cycle performance of the battery.

In any embodiment, the positive electrode material meets Formula (I) or Formula (II),

$$Li_{c1}Ni_{x1}Co_{y1}Mn_{z1}M1_{a1}O_{2-d1}, \qquad \text{Formula (I);}$$

$$Li_{c2}Ni_{x2}Co_{y2}Mn_{z2}M1_{a2}M2_{e}O_{2-d2}, \qquad \text{Formula (II);}$$

where M1 and M2 each independently include at least one of Zr, Y, Al, Ti, W, Sr, Ta, Mo, Sb, Nb, Na, K, Ca, Ce, and La, $0.5 \leq c1 < 1.2$, $0.55 \leq x1 < 1.0$, $0 \leq y1 < 0.45$, $0 \leq z1 < 0.45$, $0 < a1 \leq 0.45$, $a1+x1+y1+z1=1$, and $-0.1 \leq d1 < 0.1$; and $0.5 \leq c2 < 1.2$, $0.55 \leq x2 < 1.0$, $0 \leq y2 < 0.45$, $0 \leq z2 < 0.45$, $0 < a2 \leq 0.45$, $0 < a2 \leq 0.45$, $0 < e \leq 0.45$, $a2+x2+y2+z2+e=1$, and $-0.1 \leq d2 < 0.1$.

In any embodiment, a microstrain of the positive electrode material is less than or equal to 0.5%, and optionally less than or equal to 0.2%.

When the microstrain of the positive electrode material is in a small range, the positive electrode material is not prone to deformation during the charge and discharge process of the battery, and the high-temperature cycle performance of the battery can be improved.

In any embodiment, the aspect ratio of primary particles of the positive electrode material is 1.5-10, and optionally 2-5.

By controlling the aspect ratio of primary particles of the positive electrode material in a suitable range, the battery has a high capacity, a small direct current internal resistance and an excellent cycle capacity retention rate, whereby the performance of the battery is comprehensively improved.

A fifth aspect of the present application provides a positive electrode sheet, which includes the positive electrode material described in the present application.

A sixth aspect of the present application provides a secondary battery, which includes the positive electrode sheet described in the present application.

A seventh aspect of the present application provides a power consuming apparatus, which includes the secondary battery described in the present application.

**BRIEF DESCRIPTION OF THE DRAWINGS**

Fig. 1 shows a schematic view of a secondary battery according to an embodiment of the present application;
Fig. 2 shows an exploded view of the secondary battery according to an embodiment of the present application shown in Fig. 1;
Fig. 3 shows a schematic view of a battery module according to an embodiment of the present application;
Fig. 4 shows a schematic view of a battery pack according to an embodiment of the present application;
Fig. 5 shows an exploded view of the battery pack according to an embodiment of the present application as shown in Fig. 4; and
Fig. 6 shows a schematic view of a power consuming apparatus powered by a secondary battery according to an embodiment of the present application.

Description of reference numerals:

1 battery pack; 2 upper box; 3 lower box; 4 battery module; 5 secondary battery; 51 case; 52 electrode assembly; 53 cover plate.

**DETAILED DESCRIPTION**

Hereinafter, embodiments that specifically disclose a positive electrode material and a preparation method therefor, a secondary battery, a battery module, a battery pack, and a power consuming apparatus of the present application will be described in detail with reference to the drawings as appropriate. However, there are cases where unnecessary detailed descriptions are omitted. For example, there are cases where detailed descriptions of well-known items and repeated descriptions of actually identical structures are omitted, to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits, with a given range being defined by the selection of a lower limit and an upper limit defining the boundaries of the particular range. A range defined in this manner may be inclusive or exclusive of the end values, and may be arbitrarily combined, that is, any lower limit may be combined with any upper limit to form a range. For example, if ranges of 60-120 and 80-110 are listed for a particular parameter, it is to be understood that ranges of 60-110 and 80-120 are also expected. Additionally, if the minimum range values 1 and 2 and the maximum range values 3, 4 and 5 are listed, the following ranges are all contemplated: 1-3, 1-4, 1-5, 2-3, 2-4 and 2-5. In the present application, unless stated otherwise, the numerical range "a-b" represents an abbreviated representation of any combination of real numbers between a to b, where both a and b are real numbers. For example, the numerical range "0-5" means that all real numbers between 0-5 are listed herein, and "0-5" is merely an abbreviated representation of the combination of these numbers. In addition, when a parameter is expressed as an integer $\geq 2$, it is equivalent to disclosing that the parameter is, for example, an integer of 2, 3, 4, 5, 6, 7, 8, 9, 10, 11, and 12, etc.

Unless otherwise specified, all the embodiments and optional embodiments of the present application can be combined with each other form new technical solutions.

Unless otherwise specified, all technical features and optional technical features of the present application can be combined with each other to form new technical solutions.

Unless otherwise specified, all the steps in the present application can be performed in the order described or in a random order, and preferably in the order described. For example, the method includes steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), include steps (a), (c) and (b), or steps (c), (a) and (b), and the like.

Unless otherwise specifically stated, "comprising" and "including" mentioned in the present application indicate open inclusion or closed inclusion. For example, the "including" and "comprising" may indicate that it is possible to include or comprise other components not listed, and it is also possible to include or comprise the listed components exclusively.

Unless otherwise specified, the term "or" is inclusive in the present application. For example, the phrase "A or B" means "A, B, or both A and B. More specifically, the condition "A or B" is satisfied by any one of the following conditions: A is true (or present) and B is false (or absent); A is false (or absent) and B is true (or present); or both A and B are true (or present).

Ternary materials in related art have attracted much attention in new energy vehicle, power tool, and other industries because of their high theoretical specific capacity. However, in the actual production process, the researchers find that the conductivity of the existing ternary materials is poor, and the direct current internal resistance increases during the cycle process, resulting in the deterioration of the rate performance. In addition, during the charge and discharge process, the ternary materials tend to be eroded by the electrolyte solution, which leads to the disintegration of the structure and affects the cycle performance of the battery. Therefore, there is a need to develop a positive electrode material that can not only enable the battery to have a high capacity, but also reduce the direct current internal resistance of the battery and improve the cycle performance of the battery, to meet the requirements during use of the new generation of electrochemical systems.

[Precursor material]

Based on this, the present application provides a precursor material, having a chemical formula of $Ni_xCo_yMn_zM_a(OH)_2$,
where element M includes at least one of Zr, Y, Al, Ti, W, Sr, Ta, Mo, Sb, Nb, Na, K, Ca, Ce, and La, $0.55 \leq x < 1.0$, $0 \leq y < 0.45$, $0 \leq z < 0.45$, $0 < a \leq 0.45$, $a+x+y+z=1$, and the precursor material includes 20-70 layers of (101) planes.

In some embodiments, M may be Zr, Ta or Sb.

In some embodiments, x may be 0.55, 0.6, 0.65, 0.7, 0.75, 0.8, 0.85, 0.9, 0.95, 0.96, 1.0, or a value in a range formed by any two of the above points.

In some embodiments, y may be 0, 0.01, 0.02, 0.03, 0.04, 0.05, 0.06, 0.07, 0.08, 0.08, 0.1, 0.2, 0.3, 0.4, 0.45, or a value in a range formed by any two of the above points.

In some embodiments, z may be 0, 0.01, 0.02, 0.03, 0.04, 0.05, 0.06, 0.07, 0.08, 0.08, 0.1, 0.2, 0.3, 0.4, 0.45, or a value in a range formed by any two of the above points.

In some embodiments, a may be 0.001, 0.002, 0.003, 0.004, 0.005, 0.006, 0.007, 0.008, 0.009, 0.01, 0.02, 0.03, 0.04, 0.05, 0.1, 0.2, 0.3, 0.4, 0.45, or a value in a range formed by any two of the above points.

In some embodiments, in the chemical formula $Ni_xCo_yMn_zM_a(OH)_2$, $0.90 \leq x < 1.0$, $0 \leq y < 0.10$, $0 \leq z < 0.10$, $0 < a \leq 0.10$, and $a+x+y+z=1$.

The number of layers of the (101) plane of the precursor material can be calculated by methods and equipment known in the art, for example, by fitting the X-ray diffraction (XRD) pattern. For example, the process includes the following steps: XRD test conditions are set as follows. Cu target is used, the tube voltage (for example, 40V), tube current (for example, 40mA), scanning speed (for example, < 2°/min), scanning range of 2θ (for example, 15°-70°), step length (for example, 0.02°), discharge slit (for example, 1mm), and anti-scattering slit (for example 8 mm) are set, and a graphite monochromator is used. After fitting the XRD pattern of the precursor material, the grain size $D_{101}$ of the (101) plane is calculated: $D_{101}=k\lambda/(B_{101}*\cos\theta_{101})$, where $B_{101}$ is the half-peak width of the diffraction peak of the (101) plane of the precursor material, k is a coefficient (generally 0.89-0.90), $\theta_{101}$ is the diffraction angle at the diffraction peak of the (101) plane of the precursor material in the XRD pattern, and λ is the wavelength of the copper target. Then the corresponding value is calculated. After fitting the XRD pattern of the precursor material, the interlayer spacing $d_{101}$ of the (101) plane is calculated: $d_{101}=n\lambda/(2*\sin\theta_{101})$, where $\theta_{101}$ is the diffraction angle at the diffraction peak of the (101) plane of the precursor material, and λ is the wavelength of the copper target. Then the corresponding value is calculated. After summarizing the above parameters, the number of layers of the (101) plane is obtained: $N_{101}=D_{101}/d_{101}$.

The chemical formula of the precursor material can be determined by methods and equipment known in the art, for example, by inductively coupled plasma optical emission spectrometry (ICP-OES). For example, the process includes the following steps: The precursor material of a certain weight (for example, 1 g) is weighed into a beaker. An acid solution (for example, $HNO_3$) of a certain volume (for example, 25 mL) and a certain concentration (for example 25 vol%) is added to the precursor material to dissolve the precursor material, and diluted with deionized water of a certain volume (for example, 475 mL). Then, the diluted solution is subjected to element analysis by an inductively coupled plasma optical emission spectrometer (for example, ICAP7400 from Thermo Fisher Scientific), and the chemical formula of the precursor material is obtained by calculation.

When the number of layers of the (101) planes of the precursor material is in a suitable range, the positive electrode material prepared therewith has more active-lithium-ion crystal planes, to expose a large number of active sites of lithium ions, improve the gravimetric capacity of the positive electrode material, and improve the capacity of the battery. Moreover, the (101) plane, as a dominant crystal plane for lithium ion transmission, can structurally shorten the transmission distance of lithium ions, reduce the direct current internal resistance of the battery, and improve the dynamic performance of the battery. When the number of layers of the (101) planes of the precursor material is in a suitable range, the possibility of increased diffusion resistance of lithium ions caused by too thick particles of the positive electrode material prepared therewith can be reduced to some extent. In addition, when the number of layers of the (101) planes of the precursor material is in a suitable range, the positive electrode material prepared therewith has excellent structural stability, thus improving the high-temperature cycle performance of the battery.

In some embodiments, the number of layers of the (101) planes of the precursor material is 25-55.

In some embodiments, the number of layers of the (101) plane of the precursor material may be 20, 25, 30, 35, 40, 45, 50, 55, 60, 65, 70, or a value in a range formed by any two of the above points.

By controlling the number of layers of the (101) plane of the precursor material in the range of 25-55, the capacity of the battery can be further improved and the direct current internal resistance of the battery is reduced.

In some embodiments, the deformation fault probability fD of the precursor material is less than or equal to 7.0%.

In some embodiments, the deformation fault probability fD of the precursor material may be 7.0%, 6.5%, 6%, 5.5%, 5%, 4.5%, 4%, 3.5%, 3%, 2.5%, 2%, 1.5%, or a value in a range formed by any two of the above points.

The deformation fault probability fD of the precursor material can be calculated by methods and equipment known in the art, for example, by fitting the X-ray diffraction (XRD) pattern. For example, the process includes the following steps: XRD test conditions are set as follows. Cu target is used, the tube voltage (for example, 40V), tube current (for example, 40mA), scanning speed (for example, < 2°/min), scanning range of $2\theta$ (for example, 15°-70°), step length (for example, 0.02°), discharge slit (for example, 1mm), and anti-scattering slit (for example 8 mm) are set, and a graphite monochromator is used. After fitting the XRD pattern of the precursor, the deformation fault probability $f_D$ is calculated:

$$f_D = 8.89645 \times B_{101} \times \frac{\pi}{180} - 1.85325 \times B_{102} \times \frac{\pi}{180} - \frac{43.9925}{D_{001}}$$

where $B_{101}$ is the half-height width of the diffraction peak of the (101) plane of the precursor material, $B_{102}$ is the half-height width of the diffraction peak of the (102) plane of the precursor material, and $D_{001}$ is the grain size of the diffraction peak of the (001) plane of the precursor material. Then the corresponding value is calculated.

When the precursor material of the present application has a small deformation fault probability fD, a coordination atom in a tetrahedron center can be greatly stabilized, the formation of vacancies is inhibited, the stability of the actual stoichiometric ratio and the valence of a transition metal is promoted, and the orderliness and structural stability of the positive electrode material prepared with the precursor material are improved, thus improving the high-temperature cycle performance of the secondary battery.

In some embodiments, the deformation fault probability fD of the precursor material is less than or equal to 4.0%.

In some embodiments, the deformation fault probability fD of the precursor material may be 4%, 3.5%, 3%, 2.5%, 2%, 1.5%, or a value in a range formed by any two of the above points.

By controlling the deformation fault probability fD of the precursor material to be less than or equal to 4.0%, the high-temperature cycle capacity retention rate of the battery can be further improved, and the high-temperature cycle performance of the battery is improved.

In some embodiments, the ratio of grain sizes of the (100) plane to (001) plane of the precursor material is greater than or equal to 2.0.

In some embodiments, the ratio of grain sizes of the (100) plane to (001) plane of the precursor material may be 2.0, 2.5, 3, 3.5, 4, 4.4, 5, 5.5, 6, 6.5, 7, 7.5, or a value in a range formed by any two of the above points.

The ratio of grain sizes of the (100) plane to (001) plane of the precursor material can be calculated by methods and equipment known in the art, for example, by fitting the X-ray diffraction (XRD) pattern. For example, the process includes the following steps: XRD test conditions are set as follows. Cu target is used, the tube voltage (for example, 40V), tube current (for example, 40mA), scanning speed (for example, < 2°/min), scanning range of $2\theta$ (for example, 15°-70°), step length (for example, 0.02°), discharge slit (for example, 1mm), and anti-scattering slit (for example 8 mm) are set, and a graphite monochromator is used. After fitting the XRD pattern of the precursor material, the grain size $D_{100}$ of the (100) plane is calculated: $D_{100}=k\lambda/(B_{100}*\cos\theta_{100})$, where $B_{101}$ is the half-peak width of the diffraction peak of the (100) plane of the precursor material, k is a coefficient (generally 0.89-0.90), $\theta_{101}$ is the diffraction angle at the diffraction peak of the plane (100) of the precursor material, and $\lambda$ is the wavelength of the copper target. Then the corresponding value is calculated. After fitting the XRD pattern of the precursor material, the grain size $D_{001}$ of the (001) plane is calculated: $D_{001}=k\lambda/(B_{001}*\cos\theta_{001})$, where $B_{001}$ is the half-peak width of the diffraction peak of the plane (001) of the precursor material, k is a coefficient (generally 0.89-0.90), $\theta_{101}$ is the diffraction angle at the diffraction peak of the (001) plane of the precursor material, and $\lambda$ is the wavelength of the copper target. Then the corresponding value is calculated. The grain size

ratio $D_{100}/D_{001}$ of the (100) to (001) plane is obtained after the above parameters are summarized.

By controlling the ratio of grain sizes of the (100) plane to (001) plane in a suitable range, the deformation fault probability fD of the precursor material can be controlled in a suitable range, and the structural stability of the positive electrode material prepared therewith is improved, thus improving the high-temperature cycle performance of the battery.

In some embodiments, the ratio of grain sizes of the (100) plane to (001) plane of the precursor material is greater than or equal to 4.4.

In some embodiments, the ratio of grain sizes of the (100) plane to (001) plane of the precursor material may be 4.4, 5, 5.5, 6, 6.5, 7, 7.5, 8, or a value in a range formed by any two of the above points.

By controlling the ratio of grain sizes of the (100) plane to (001) plane of the precursor material in a suitable range, the high-temperature cycle capacity retention rate of the battery is further improved, and the high-temperature cycle performance of the battery is improved.

In any embodiment, a pore volume of the precursor material is greater than or equal to 0.02 $cm^3/g$.

Herein, the term "pore volume" refers to the volume of pores per unit weight of the precursor material.

In some embodiments, the pore volume of the precursor material may be 0.02$cm^3/g$, 0.024$cm^3/g$, 0.025$cm^3/g$, 0.026$cm^3/g$, 0.028$cm^3/g$, 0.030$cm^3/g$, 0.032$cm^3/g$, 0.034$cm^3/g$, 0.036$cm^3/g$, 0.038$cm^3/g$, 0.040$cm^3/g$, or a value in a range formed by any two of the above points.

The pore volume of the precursor material can be determined by methods and equipment known in the art. For example, the pore volume of the precursor material is determined according to GB/T 21650.2-2008 Pore size distribution and porosity of solid materials by mercury porosimetry and gas adsorption-Part 2:Analysis of mesopores and macropores by gas adsorption. For example, the process includes the following steps: A certain weight of the sample is weighed, and added in a true density tester. The test system is sealed, and helium or nitrogen is introduced according to the procedure. By detecting the pressure of gas in the sample chamber and expansion chamber, the true volume is calculated according to Bohr's law (PV=nRT).

By adjusting the pore volume of the precursor material to be greater than or equal to 0.02$cm^3/g$, the precursor material is properly loose and abundantly porous, thus facilitating the lithium ion diffusion and improving the capacity of the battery in the process of preparing the positive electrode material.

In any embodiment, a pore volume of the precursor material is greater than or equal to 0.025 $cm^3/g$.

In some embodiments, the pore volume of the precursor material may be 0.025$cm^3/g$, 0.026$cm^3/g$, 0.028$cm^3/g$, 0.030$cm^3/g$, 0.032$cm^3/g$, 0.034$cm^3/g$, 0.036$cm^3/g$, 0.038$cm^3/g$, 0.040$cm^3/g$, or a value in a range formed by any two of the above points.

By controlling the pore volume of the precursor material to be greater than or equal to 0.025$cm^3/g$, the capacity of the battery can be further improved.

In some embodiments, the Dv50 of the precursor material is 3$\mu$m-15$\mu$m.

Herein, the term "Dv50" refers to the median particle size of the precursor material. Specifically, Dv50 indicates the particle size when the precursor material reaches a cumulative volume of 50% from the small particle size side in the particle size distribution based on volume.

In some embodiments, the Dv50 of the precursor material may be 3$\mu$m, 5$\mu$m, 7$\mu$m, 9$\mu$m, 10$\mu$m, 12$\mu$m, 14$\mu$m, 15$\mu$m, or a value in a range formed by any two of the above points.

The Dv50 of the precursor material can be determined by methods and equipment known in the art. For example, the determination can be carried out according to the method specified in GB/T19077-2016. For example, the process includes the following steps: A certain weight (e.g. 0.1g-0.13g) of the sample of the precursor material to be tested is weighed into a beaker, a certain weight (e.g. 5g) of anhydrous alcohol is added, a stirring rod is added and the beaker is sealed with plastic wrap. After ultrasonic treatment for a certain period of time (for example, 5 min), the sample is transferred to a magnetic stirrer and stirred at a certain speed (for example, 500 rpm) for a certain period of time (for example, 20 min or more). A laser particle size analyzer (Malvern 3000 laser particle size analyzer from Malvern Instruments Inc.) is used for test. Dv50 is the corresponding particle size when the cumulative volume distribution percentage of secondary particles of the precursor material reaches 50%.

Particles with different particle sizes have different areas and different numbers of reactive sites. Accordingly, the particle size affects the deintercalation and intercalation rate of ions, and affects the gravimetric capacity of the material. By controlling the Dv50 of the precursor material in a suitable range such that the Dv50 of the positive electrode material prepared therewith is in a suitable range, the transmission distance of lithium ions is shortened, the direct current internal resistance of the battery is reduced, the gravimetic capacity of the material is improved, and the capacity of the battery is improved.

In some embodiments, the specific surface area of the precursor material is 4$m^2$/g-20$m^2$/g.

As used herein, the term "specific surface area" refers to the total area per unit weight of the precursor material.

In some embodiments, the specific surface area of the precursor material may be 4 $m^2$/g, 6 $m^2$/g, 8 $m^2$/g, 10 $m^2$/g, 12 $m^2$/g, 14 $m^2$/g, 16 $m^2$/g, 18 $m^2$/g, 20 $m^2$/g, or a value in a range formed by any two of the above points.

The specific surface area of the precursor material can be determined by methods and equipment known in the art. For example, the determination can be carried out by the gas adsorption method according to the test standard GB/T19587-2017. For example, the process includes the following steps: The precursor material is taken as a sample, and the sample tube is immersed in liquid nitrogen at -196°C. Under a certain relative pressure (for example, the relative pressure is 0.05-0.30), the adsorption amount of nitrogen on the solid surface under different pressures is determined. Based on the BET multilayer adsorption theory and formula, the monolayer adsorption amount of the sample is obtained, and the specific surface area of the precursor material is calculated.

When the specific surface area of the precursor material is in a suitable range, the positive electrode material prepared therewith has a large number of active reaction sites of lithium ions, thus improving the capacity of the battery.

In some embodiments, the specific surface area of the precursor material is $8m^2/g$-$13m^2/g$.

In some embodiments, the specific surface area of the precursor material may be $8m^2/g$, $10m^2/g$, $12m^2/g$, $14m^2/g$, $16m^2/g$, $18m^2/g$, $20m^2/g$, or a value in a range formed by any two of the above points.

When the specific surface area of the precursor material is within a suitable range, the positive electrode material prepared therewith has more lithium ion active sites, which improves the capacity of the battery, and reduces too many active sites that increase the possibility of side reactions between the positive electrode material and the electrolyte solution to worsen the cycle performance of the battery. Therefore, both the capacity and the cycle capacity retention rate of the battery are improved, to comprehensively improve the battery performance.

In some embodiments, the intensity ratio of diffraction peaks of the (001) plane to (101) plane of the precursor material is 0.60-1.25.

In some embodiments, the intensity ratio of diffraction peaks of the (001) plane to (101) plane of the precursor material may be 0.60, 0.65, 0.70, 0.75, 0.80, 0.85, 0.90, 0.95, 1.00, 1.05, 1.10, 1.15, 1.20, 1.25, or a value in a range formed by any two of the above points.

The intensity ratio of diffraction peaks of the (001) plane to (101) plane of the precursor material can be determined by methods and equipment known in the art, for example, XRD can be used for measurement and calculation. For example, the XRD pattern of the tested sample is scanned at a slow speed ($< 2°/min$), and the image is processed by smoothing and filtering. Then the integral areas $I_{001}$ and $I_{101}$ of diffraction peaks of the (001) plane and (101) plane are obtained, and the intensity ratio of diffraction peaks of the (001) plane to (101) plane of the precursor material is calculated by ($I_{001}/I_{101}$).

By controlling the intensity ratio of diffraction peaks of the (001) plane and (101) plane of the precursor material in a suitable range, the precursor material has a good degree of crystal plane orientation, the positive electrode material prepared therewith has a high ion orderliness, and the battery has a high capacity and an excellent cycle performance.

In some embodiments, the intensity ratio of diffraction peaks of the (001) plane to (101) plane of the precursor material is 0.9-1.18.

In some embodiments, the intensity ratio of diffraction peaks of the (001) plane to (101) plane of the precursor material may be 0.90, 0.95, 1.00, 1.05, 1.10, 1.15, 1.18, or a value in a range formed by any two of the above points.

By controlling the intensity ratio of diffraction peaks of the (001) plane and (101) plane of the precursor material in a suitable range, the precursor material has a good degree of crystal plane orientation, the phenomenon that lithium and nickel are mixed in the subsequent preparation of the positive electrode material is reduced. Accordingly, the battery has a high capacity and high cycle capacity retention rate, thereby comprehensively improving the performance of the battery.

[Preparation method of precursor]

The present application provides a method for preparing a precursor material. The preparation method includes the following steps:

preparing a precursor material by a co-precipitation reaction, where the precursor material has a chemical formula of $Ni_xCo_yMn_zM_a(OH)_2$,
where element M includes at least one of Zr, Y, Al, Ti, W, Sr, Ta, Mo, Sb, Nb, Na, K, Ca, Ce, and La, $0.55 \leq x < 1.0$, $0 \leq y < 0.45$, $0 \leq z < 0.45$, $0 < a \leq 0.45$, $a+x+y+z=1$, and the precursor material includes 20-70 layers of (101) planes.

Herein, the term "co-precipitation reaction" refers to a precipitation reaction of a metal solution, a precipitant and a complexing agent at a certain temperature.

In some embodiments, x may be 0.55, 0.6, 0.65, 0.7, 0.75, 0.8, 0.85, 0.9, 0.95, 0.96, 1.0, or a value in a range formed by any two of the above points.

In some embodiments, y may be 0, 0.01, 0.02, 0.03, 0.04, 0.05, 0.06, 0.07, 0.08, 0.08, 0.1, 0.2, 0.3, 0.4, 0.45, or a value in a range formed by any two of the above points.

In some embodiments, z may be 0, 0.01, 0.02, 0.03, 0.04, 0.05, 0.06, 0.07, 0.08, 0.08, 0.1, 0.2, 0.3, 0.4, 0.45, or a value in a range formed by any two of the above points.

In some embodiments, a may be 0.001, 0.002, 0.003, 0.004, 0.005, 0.006, 0.007, 0.008, 0.009, 0.01, 0.02, 0.03, 0.04, 0.05, 0.1, 0.2, 0.3, 0.4, 0.45, or a value in a range formed by any two of the above points.

In some embodiments, in the chemical formula $Ni_xCo_yMn_zM_a(OH)_2$, $0.90 \leq x < 1.0$, $0 \leq y < 0.10$, $0 \leq z < 0.10$, $0 < a \leq 0.10$, and $a+x+y+z=1$.

By adopting the preparation method provided in the present application, a precursor material with 20-70 layers of (101) planes can be obtained, which can improve the capacity of the battery, reduce the direct current internal resistance of the battery, and improve the high-temperature cycle performance of the battery.

In some embodiments, the preparation method specifically includes Step (1) and Step (2):

Step (1): con-currently adding a mixed salt solution containing a nickel salt, a cobalt salt and a manganese salt, a precipitant solution, a complexing agent solution and a surfactant into a base reaction solution, carrying out a first co-precipitation reaction, and stopping the reaction after a first target particle size Dv50 is achieved, to obtain a precursor mother liquor; and

Step (2): parallely adding a precipitant solution, a complexing agent solution and an M salt solution into the precursor mother liquor, carrying out a second co-precipitation reaction, and stopping the reaction after a second target particle size Dv50 is achieved, to obtain the precursor material.

In some embodiments, the nickel salt includes one or more of nickel sulfate, nickel hydrochloride, nickel nitrate, and nickel acetate.

In some embodiments, the cobalt salt includes one or more of cobalt sulfate, cobalt oxalate, cobalt nitrate, and cobalt acetate.

In some embodiments, the manganese salt includes one or more of manganese sulfate, manganese hydrochloride, manganese nitrate, and manganese acetate.

In some embodiments, the M salt includes a zirconium salt, a tantalum salt, or an antimony salt, and optionally an antimony salt.

In some embodiments, the zirconium salt includes one or more of zirconium sulfate, zirconium hydrochloride, zirconium nitrate, zirconium oxalate, zirconium acetate, and sodium zirconate.

In some embodiments, the tantalum salt includes one or more of tantalum sulfate, tantalum hydrochloride, tantalum nitrate, tantalum acetate, tantalum oxalate, and sodium tantalate.

In some embodiments, the antimony salt includes one or more of antimony sulfate, antimony hydrochloride, antimony nitrate, antimony acetate, antimony oxalate, and sodium antimonate.

In some embodiments, the precipitant includes one or more of sodium hydroxide, sodium carbonate, sodium bicarbonate and ammonium bicarbonate, and optionally sodium hydroxide.

In some embodiments, the complexing agent includes one or more of aqueous ammonia, lactic acid, polyvinylpyrrolidone and optionally aqueous ammonia.

By the preparation of the precursor material by two-stage co-precipitation reactions, the growth rate of the crystal can be adjusted, the crystal plane orientation of crystal growth can be effectively controlled, and the number of layers of the (101) plane is enabled to be in a suitable range. In addition, by adding a surfactant in Step (1) to inhibit the growth of the (001) plane, the (101) plane is enabled to grow in order, to expose more dominant surfaces for lithium ion transmission, reduce the direct current internal resistance of the battery and improve the rate performance of the battery. By adding element M in Step (2), flaky primary particles are advantageously generated, the growth of the (101) plane is promoted, to obtain a precursor material with a controllable number of layers of (101) planes. Thus, a positive electrode material with a controllable number of layers of (101) planes can be obtained. In addition, the added element M can generate $Li_pM_qO_m$ with excellent lithium ion conductivity in the subsequent process of preparing the positive electrode material, which can increase the transmission rate of lithium ions of the positive electrode material and improve the rate performance of the battery.

In some embodiment, the content in percentage by weight of the surfactant added in Step (1) is 0.1%-5%, based on the total weight of the nickel salt, the cobalt salt and the manganese salt in the mixed salt solution.

In some embodiments, based on the total weight of the nickel salt, the cobalt salt and the manganese salt in the mixed salt solution, the content in percentage by weight of the surfactant added in Step (1) may be 0.1%, 0.2%, 0.3%, 0.4%, 0.5%, 0.6%, 0.8%, 1%, 1.5%, 2%, 2.5%, 3%, 3.5%, 4%, 4.5%, 5%, or a value in a range formed by any two of the above points.

In some embodiments, the surfactant added in Step (1) has a hydrophile-lipophile balance value of greater than 10, and optionally includes one or more of polyvinylpyrrolidone, triethanolamine oleate, polyoxyethylene oleyl ether, or polyoxyethylene lauryl ether.

In some embodiments, the surfactant includes one or more of polyvinylpyrrolidone, polyoxyethylene oxypropylene oleate, polyoxypropylene lanolin alcohol ether, triethanolamine oleate, polyoxyethylene oleyl ether, polyoxyethylene cholesterol ether, polyoxyethylene castor oil or polyoxyethylene lauryl ether. In some embodiments, the surfactant includes polyvinylpyrrolidone.

Herein, the term "hydrophile-lipophile balance value" is an index characterizing the size and strength balance between a hydrophilic group and a lipophilic group in the surfactant molecule. Specifically, the hydrophile-lipophile balance value= hydrophilicity of hydrophilic group/lipophilicity of lipophilic group. A greater hydrophile-lipophile balance value indicates a stronger hydrophilicity, and a smaller hydrophile-lipophile balance value indicates a stronger lipophilicity.

By adding a surfactant having a hydrophile-lipophile balance value of greater than 10 in Step (1), the growth of the (001) plane is inhibited, and the ordered growth of the (101) plane is promoted. By controlling the content in percentage by weight of the surfactant added, the number of layers of the (101) planes of the precursor material and the aspect ratio of primary particles of the positive electrode material can be adjusted to fall in suitable ranges to some extent, whereby the precursor material and the positive electrode material have excellent structural properties.

In some embodiments, the first target particle size Dv50 in Step (1) is 3 $\mu$m-9.5 $\mu$m, and the second target particle size Dv50 in Step (2) is 3 $\mu$m-15 $\mu$m.

In some embodiments, the first target particle size Dv50 in Step (1) may be 3$\mu$m, 5$\mu$m, 7$\mu$m, 9$\mu$m, 9.5$\mu$m, or a value in a range formed by any two of the above points. The second target particle size Dv50 in Step (2) may be 3$\mu$m, 5$\mu$m, 7$\mu$m, 9$\mu$m, 10$\mu$m, 12$\mu$m, 14$\mu$m, 15$\mu$m, or a value in a range formed by any two of the above points.

By controlling the first target particle size Dv50 in Step (1) in a suitable range, the second target particle size Dv50 can be advantageously adjusted to be in a suitable range, whereby the Dv50 of the precursor material is adjusted to be in a suitable range, to further improve the capacity and reduce the direct current internal resistance of the battery.

In some embodiments, the reaction temperature of the first co-precipitation reaction in Step (1) is 65-85°C, and the reaction temperature of the second co-precipitation reaction in Step (2) is 65-85°C.

In some embodiments, the reaction temperature of the first co-precipitation reaction in Step (1) may be 65°C, 70°C, 75°C, 80°C, 85°C, or a value in a range formed by any two of the above points. The reaction temperature of the second co-precipitation reaction in Step (2) may be 65°C, 70°C, 75°C, 80°C, 85°C, or a value in a range formed by any two of the above points.

By appropriately controlling the reaction temperatures of the first co-precipitation reaction and the second co-precipitation reaction, the first co-precipitation reaction and the second co-precipitation reaction are more stable and efficient, and the subsequently obtained precursor material and positive electrode material have better structural properties, thereby improving the capacity of the battery, reducing the direct current internal resistance of the battery, and improving the high-temperature cycle performance of the battery.

In some embodiments, the pH value of the first co-precipitation reaction in Step (1) is 8.5-11.5, and the pH value of the second co-precipitation reaction in Step (2) is 8.5-11.5.

In some embodiments, the pH value of the first co-precipitation reaction in Step (1) may be 8.5, 9, 9.5, 10, 10.5, 11, 11.5, or a value in a range formed by any two of the above points. The pH value of the second co-precipitation reaction in Step (2) may be 8.5, 9, 9.5, 10, 10.5, 11, 11.5, or a value in a range formed by any two of the above points.

By appropriately controlling the pH values of the first co-precipitation reaction and the second co-precipitation reaction, the first co-precipitation reaction and the second co-precipitation reaction are more stable and efficient, and the subsequently obtained precursor material and positive electrode material have better structural properties, thereby improving the capacity of the battery, reducing the direct current internal resistance of the battery, and improving the high-temperature cycle performance of the battery.

In some embodiments, the molar concentration of the complexing agent in the first co-precipitation reaction system in Step (1) is 0.5-1 mol/L, and the molar concentration of the complexing agent in the second co-precipitation reaction system in Step (2) is 0.5-1 mol/L.

In some embodiments, the molar concentration of the complexing agent in the first co-precipitation reaction system in Step (1) is 0.5mol/L, 0.6mol/L, 0.7mol/L, 0.8mol/L, 0.9mol/L, 1.0mol/L, or a value in a range formed by any two of the above points. The molar concentration of the complexing agent in the second co-precipitation reaction system in Step (2) is 0.5mol/L, 0.6mol/L, 0.7mol/L, 0.8mol/L, 0.9mol/L, 1.0mol/L, or a value in a range formed by any two of the above points.

By appropriately controlling the molar concentrations of the complexing agent in the first co-precipitation reaction and the second co-precipitation reaction, the first co-precipitation reaction and the second co-precipitation reaction are more stable and efficient, and the subsequently obtained precursor material and positive electrode material have better structural properties, thereby improving the capacity of the battery, reducing the direct current internal resistance of the battery, and improving the high-temperature cycle performance of the battery.

In some embodiments, the molar concentration of the mixed salt solution added in Step (1) is 1-5 mol/L; the molar concentration of the precipitant solution added in Step (1) is 1-10 mol/L; the molar concentration of the precipitant solution added in Step (2) is 1-10 mol/L; and the molar concentration of the M salt solution in Step (2) is 0.5-1 mol/L.

In some embodiments, the molar concentration of the mixed salt solution added in Step (1) may be 1mol/L, 1.5mol/L, 2mol/L, 2.5mol/L, 3mol/L, 3.5mol/L, 4mol/L, 4.5mol/L, 5mol/L, or a value in a range formed by any two of the above points.

In some embodiments, the molar concentration of the precipitant solution added in Step (1) may be 1mol/L, 2mol/L, 3mol/L, 4mol/L, 5mol/L, 6mol/L, 7mol/L, 8mol/L, 9mol/L, 10mol/L, or a value in a range formed by any two of the above points.

In some embodiments, the molar concentration of the precipitant solution added in Step (2) may be 1mol/L, 2mol/L, 3mol/L, 4mol/L, 5mol/L, 6mol/L, 7mol/L, 8mol/L, 9mol/L, 10mol/L, or a value in a range formed by any two of the above points.

In some embodiments, the molar concentration of the M salt solution added in Step (2) may be 0.5mol/L, 0.55mol/L, 0.6mol/L, 0.65mol/L, 0.7mol/L, 0.75mol/L, 0.8mol/L, 0.85mol/L, 0.9mol/L, 1.0mol/L, or a value in a range formed by any two of the above points.

By controlling the molar concentrations of the precipitant, the mixed salt solution, and the M salt solution in the first co-precipitation reaction and the second co-precipitation reaction in suitable ranges, the first co-precipitation reaction and the second co-precipitation reaction are more stable and efficient, and the subsequently obtained precursor material and positive electrode material have better structural properties, thereby improving the capacity of the battery, reducing the direct current internal resistance of the battery, and improving the high-temperature cycle performance of the battery.

In some embodiments, Step (1) specifically includes:

preparing a 1-5 mol/L mixed salt solution containing a nickel salt, a cobalt salt and a manganese salt, a 1-10 mol/L precipitant solution, a 1-5 mol/L complexing agent solution, and a 0.5-1 mol/L M salt solution;

adding pure water, the complexing agent solution and the precipitant solution into a reactor as a base reaction solution, and controlling the pH value of the base reaction solution to be 8.5-11.5 and the molar concentration of the complexing agent to be 0.5-1 mol/L; and

concurrently adding the mixed salt solution, the precipitant solution, the complexing agent solution and 0.1%-5% by weight of a surfactant based on the total weight of the manganese salt, the cobalt salt and the nickel salt in the mixed salt solution to the base reaction solution, carrying out a first co-precipitation reaction by maintaining the pH value and the molar concentration of the complexing agent constant and controlling the reaction temperature at 65-85°C and the rotation speed at 200-800rpm, and optionally at 300-400rpm, and stopping the reaction after a first target particle size Dv50 that is $3\mu m$-$9.5\mu m$ is achieved, to obtain a precursor mother liquor.

In some embodiments, Step (2) specifically includes:

parallely adding the precipitant solution, the complexing agent solution and the M salt solution into the precursor mother liquor, carrying out a second co-precipitation reaction by controlling the reaction temperature at 65-85°C, the pH value at 8.5-11.5, and the molar concentration of the complexing agent at 0.5-1 mol/L, and stopping the reaction after a second target particle size Dv 50 that is $3\mu m$-$15\mu m$ is achieved, to obtain the precursor material.

The present application provides use of the precursor material described in the present application or the precursor material prepared by the preparation method described in the present application in the preparation of a positive electrode material.

[Positive electrode material]

The present application provides a positive electrode material, which is prepared with the precursor material described in the present application or the precursor material prepared by the preparation method described in the present application.

The positive electrode material has a high gravimetric capacity, which can improve the capacity of the battery, reduce the direct current internal resistance of the battery, and improve the high-temperature cycle performance of the battery.

In some embodiments, the positive electrode material meets Formula (I) or Formula (II):

$$Li_{c1}Ni_{x1}Co_{y1}Mn_{z1}M1_{a1}O_{2-d1}, \qquad \text{Formula (I)};$$

$$Li_{c2}Ni_{x2}Co_{y2}Mn_{z2}M1_{a2}M2_{e}O_{2-d2}, \qquad \text{Formula (II)};$$

where M1 and M2 each independently include at least one of Zr, Y, Al, Ti, W, Sr, Ta, Mo, Sb, Nb, Na, K, Ca, Ce, and La, $0.5 \leq c1 < 1.2$, $0.55 \leq x1 < 1.0$, $0 \leq y1 < 0.45$, $0 \leq z1 < 0.45$, $0 < a1 \leq 0.45$, $a1+x1+y1+z1=1$, and $-0.1 \leq d1 < 0.1$; and $0.5 \leq c2 < 1.2$, $0.55 \leq x2 < 1.0$, $0 \leq y2 < 0.45$, $0 \leq z2 < 0.45$, $0 < a2 \leq 0.45$, $0 < a2 \leq 0.45$, $0 < e \leq 0.45$, $a2+x2+y2+z2+e=1$, and $-0.1 \leq d2 < 0.1$.

In some embodiments, M1 and M2 include the same elements.

In some embodiments, M1 and M2 include different elements.

In some embodiments, c1 may be 0.5, 0.6, 0.7, 0.8, 0.9, 1.0, 1.1, 1.2, or a value in a range formed by any two of the above points.

In some embodiments, x1 may be 0.55, 0.6, 0.65, 0.7, 0.75, 0.8, 0.85, 0.9, 0.95, 0.96, 1.0, or a value in a range formed by any two of the above points.

In some embodiments, y1 may be 0, 0.01, 0.02, 0.03, 0.04, 0.05, 0.06, 0.07, 0.08, 0.08, 0.1, 0.2, 0.3, 0.4, 0.45, or a value in a range formed by any two of the above points.

In some embodiments, z1 may be 0, 0.01, 0.02, 0.03, 0.04, 0.05, 0.06, 0.07, 0.08, 0.08, 0.1, 0.2, 0.3, 0.4, 0.45, or a value in a range formed by any two of the above points.

In some embodiments, a1 may be 0.001, 0.002, 0.003, 0.004, 0.005, 0.006, 0.007, 0.008, 0.009, 0.01, 0.02, 0.03, 0.04, 0.05, 0.1, 0.2, 0.3, 0.4, 0.45, or a value in a range formed by any two of the above points.

In some embodiments, d1 may be -0.1, -0.05, 0, 0.05, 0.1, or a value in a range formed by any two of the above points.

The chemical formula of the positive electrode material can be determined by methods and equipment known in the art, for example, by inductively coupled plasma optical emission spectrometry (ICP-OES). For example, the process includes the following steps: The positive electrode material of a certain weight (for example, 1 g) is weighed into a beaker. An acid solution (for example, $HNO_3$) of a certain volume (for example, 25 mL) and a certain concentration (for example 25 vol%) is added to the positive electrode material to dissolve the positive electrode material, and diluted with deionized water of a certain volume (for example, 475 mL). Then, the diluted solution is subjected to element analysis by an inductively coupled plasma optical emission spectrometer (for example, ICAP7400 from Thermo Fisher Scientific), and the chemical formula of the positive electrode material is obtained by calculation.

In some embodiments, the positive electrode material meets Formula (II):

$$Li_{c2}Ni_{x2}Co_{y2}Mn_{z2}M1_{a2}M2_eO_{2-d2}, \qquad \text{Formula (II);}$$

where M1 and M2 each independently include at least one of Zr, Y, Al, Ti, W, Sr, Ta, Mo, Sb, Nb, Na, K, Ca, Ce, and La, $0.5 \leq c2 < 1.2$, $0.55 \leq x2 < 1.0$, $0 \leq y2 < 0.45$, $0 \leq z2 < 0.45$, $0 < a2 \leq 0.45$, $0 < a2 \leq 0.45$, $0 < e \leq 0.45$, $a2+x2+y2+z2+e=1$, $-0.1 \leq d2 < 0.1$.

In some embodiments, c2 may be 0.5, 0.6, 0.7, 0.8, 0.9, 1.0, 1.1, 1.2, or a value in a range formed by any two of the above points.

In some embodiments, x2 may be 0.55, 0.6, 0.65, 0.7, 0.75, 0.8, 0.85, 0.9, 0.95, 0.96, 1.0, or a value in a range formed by any two of the above points.

In some embodiments, y2 may be 0, 0.01, 0.02, 0.03, 0.04, 0.05, 0.06, 0.07, 0.08, 0.08, 0.1, 0.2, 0.3, 0.4, 0.45, or a value in a range formed by any two of the above points.

In some embodiments, z2 may be 0, 0.01, 0.02, 0.03, 0.04, 0.05, 0.06, 0.07, 0.08, 0.08, 0.1, 0.2, 0.3, 0.4, 0.45, or a value in a range formed by any two of the above points.

In some embodiments, a2 may be 0.001, 0.002, 0.003, 0.004, 0.005, 0.006, 0.007, 0.008, 0.009, 0.01, 0.02, 0.03, 0.04, 0.05, 0.1, 0.2, 0.3, 0.4, 0.45, or a value in a range formed by any two of the above points.

In some embodiments, d2 may be -0.1, -0.05, 0, 0.05, 0.1, or a value in a range formed by any two of the above points.

In some embodiments, e may be 0.001, 0.002, 0.003, 0.004, 0.005, 0.006, 0.007, 0.008, 0.009, 0.01, 0.02, 0.03, 0.04, 0.05, 0.1, 0.2, 0.3, 0.4, 0.45, or a value in a range formed by any two of the above points.

The positive electrode material contains element M2, which facilitates the particles of the positive electrode material to distribute radially. The positive electrode material has a good lithium ion transmission channel, to promote the lithium ion transmission during the charge and discharge process, improve the capacity of the battery, reduce the direct current internal resistance of the battery, and improve the high-temperature cycle performance of the battery.

In some embodiments, the microstrain of the positive electrode material is less than or equal to 0.5%.

Herein, the term "microstrain" refers to the microstrain that exists inside the positive electrode material and balances itself without external force or torque.

In some embodiments, the microstrain of the positive electrode material may be 0.5%, 0.45%, 0.4%, 0.35%, 0.3%, 0.25%, 0.2%, 0.18%, 0.16%, 0.14%, 0.12%, 0.1%, or a value in a range formed by any two of the above points.

The microstrain of the positive electrode material can be calculated by methods and equipment known in the art, for example, by fitting the X-ray diffraction (XRD) pattern. For example, the process includes the following steps: XRD test conditions are set as follows. Cu target is used, the tube voltage (for example, 40V), tube current (for example, 40mA), scanning speed (for example, < 2°/min), scanning range of 20 (for example, 15°-70°), step length (for example, 0.02°), discharge slit (for example, 1mm), and anti-scattering slit (for example 8 mm) are set, and a graphite monochromator is used. The microstrain is obtained by fitting the XRD pattern: $MS=(B_{hkl}*Cos\theta_{hkl})/(4sin\theta_{hkl})$, where $\theta_{hkl}$ is the diffraction angle of the (hkl) plane in the XRD pattern of the positive electrode material, and $B_{hkl}$ is the half-height width of the (hkl) plane in the XRD pattern of the positive electrode material.

When the microstrain of the positive electrode material is in a small range, the positive electrode material is not prone to deformation during the charge and discharge process of the battery, and the high-temperature cycle performance of the battery can be improved.

In some embodiments, the microstrain of the positive electrode material is less than or equal to 0.2%.

In some embodiments, the microstrain of the positive electrode material may be 0.2%, 0.18%, 0.16%, 0.14%, 0.12%, 0.1%, or a value in a range formed by any two of the above points.

By controlling the microstrain of the positive electrode material to be less than or equal to 0.2%, the high-temperature cycle capacity retention rate of the battery is further improved, and the high-temperature cycle performance of the battery is improved.

In some embodiments, the aspect ratio of primary particles of the positive electrode material is 1.5-10.

In some embodiments, the term "primary particles" means particles of the positive electrode material before agglomeration.

In some embodiments, the aspect ratio of primary particles of the positive electrode material may be 1.5, 1.8, 2.0, 2.3, 2.5, 2.8, 3.0, 3.5, 4, 4.5, 5, 6, 7, 8, 9, 10, or a value in a range formed by any two of the above points.

The aspect ratio of primary particles of the positive electrode material can be determined by methods and equipment known in the art, for example, by static image processing technology. For example, the process includes the following steps: The scanning electron microscopy images of static primary particles of the positive electrode material is intelligently recognized by software, to obtain the major diameter RL and minor diameter RS of primary particles, and then the aspect ratio =RL/RS is calculated. The minor diameter refers to the shortest distance that passes through the center point of the projected image of the primary particle and intersects with the edge of the projected image. The major diameter refers to the longest distance that passes through the center point of the projected image of the primary particle and intersects with the edge of the projected image.

When the aspect ratio of primary particles of the positive electrode material is in a suitable range, the transmission distance of lithium ions is reduced and a large number of active sites of lithium ions are exposed, to improve the gravimetic capacity of the material. Moreover, when the aspect ratio of the primary particles is in a suitable range, the contact area between the material and the electrolyte solution is reduced, the possibility of side reactions between the material and the electrolyte solution is reduced, and the high-temperature cycle performance of the battery is improved.

When the aspect ratio of primary particles of the positive electrode material is in a suitable range, the battery has a high capacity, a low direct current internal resistance, and an excellent high-temperature cycle performance.

In some embodiments, the aspect ratio of primary particles of the positive electrode material is 2-5.

In some embodiments, the aspect ratio of primary particles of the positive electrode material may be 2.0, 2.3, 2.5, 2.8, 3.0, 3.5, 4, 4.5, 5, or a value in a range formed by any two of the above points.

When the aspect ratio of primary particles of the positive electrode material is in a suitable range, the capacity, direct current internal resistance, and cycle capacity retention rate of the battery are all desirable, to improve the performance of the battery comprehensively.

[Preparation method of positive electrode material]

In some embodiments, the preparation method of the positive electrode material is as follows.

A lithium source, the precursor material of the present application, and a compound containing element M2 are calcined to obtain a positive electrode material, where the molar ratio of lithium element to nickel element, cobalt element and manganese element in the precursor material is controlled to be 0.9-1.1.

In some embodiments, the calcination temperature is 700-900°C.

In some embodiments, the calcination temperature can be 700°C, 800°C, 900°C, or a value in a range formed by any two of the above points.

In some embodiments, the calcination time is 10-20h.

In some embodiments, the calcination time can be 10h, 11h, 12h, 13h, 14h, 15h, 16h, 17h, 18h, 19h, 20h, or a value in a range formed by any two of the above points.

In some embodiments, element M2 is the same as element M in the precursor material.

In some embodiments, element M2 is different from element M in the precursor material.

In some embodiments, the compound containing element M2 includes one or more of a salt containing element M2 and an oxide containing element M2.

The compound containing element M2 added in the calcination process during the preparation of the positive electrode material facilitates the particles of the positive electrode material to distribute radially. The positive electrode material has a good lithium ion transmission channel, to promote the lithium ion transmission during the charge and discharge process, improve the capacity of the battery, reduce the direct current internal resistance of the battery, and improve the high-temperature cycle performance of the battery.

[Positive electrode sheet]

The present application provides a positive electrode sheet, which includes the positive electrode material described in the present application.

In some embodiments, the positive electrode sheet includes a positive electrode current collector and a positive electrode material layer formed on at least part of the surface of the positive electrode current collector. The positive electrode material layer includes the positive electrode material in some embodiments.

The positive electrode material layer may also include a conductive agent to improve the conductivity of the positive electrode. The conductive agent is optionally one or more of Super P, acetylene black, carbon black, Ketjen black, carbon dot, carbon nanotubes, graphite, graphene, and carbon nanofibers.

The positive electrode material layer may further include a binder to firmly bond the positive electrode material and optional conductive agent on the positive electrode current collector. The binder is optionally at least one of polyvinylidene fluoride (PVDF), polytetrafluoroethylene (PTFE), polyacrylic acid (PAA), polyvinyl alcohol (PVA), ethylene-vinyl acetate copolymer- (EVA), styrene-butadiene rubber (SBR), carboxymethyl cellulose (CMC), sodium alginate (SA), polymethacrylic acid (PMA) and carboxymethyl chitosan (CMCS).

The positive electrode current collector may be a conductive carbon sheet, a metal foil, a carbon-coated metal foil, a porous metal sheet, or a composite current collector. The conductive carbon material of the conductive carbon sheet is optionally at least one of Super P, carbon black, Ketjen black, carbon dots, carbon nanotubes, graphite, graphene, and carbon nanofibers. The metal material of the metal foil, the carbon-coated metal foil, and the porous metal sheet are each independently at least one selected from copper, aluminum, nickel, and stainless steel. The composite current collector may be a composite current collector formed by complexing a metal foil with a polymer base film.

In some embodiments, the positive electrode sheet can be prepared by dispersing the components for preparing the positive electrode sheet, for example, the positive electrode material, the conductive agent, the binder and any other components in a solvent (for example, N-methyl pyrrolidone) to form a positive electrode slurry; and applying the positive electrode slurry on a positive electrode current collector, followed by oven drying, cold pressing and other procedures, to obtain the positive electrode sheet.

[Negative-electrode sheet]

The negative electrode sheet includes a negative electrode current collector and a negative electrode film layer arranged on at least one surface of the negative electrode current collector. The negative electrode film layer includes a negative electrode active material.

For example, the negative electrode current collector has two opposite surfaces in its own thickness direction, and the negative electrode film layer is provided on either one or both of the two opposite surfaces of the negative electrode current collector.

In some embodiments, the negative electrode current collector can be a metal foil or a composite current collector. For example, a copper foil can be used as the metal foil. The composite current collector may comprise a polymer material substrate and a metal layer formed on at least one surface of the polymer material substrate. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the negative electrode active material may be a negative electrode material for batteries known in the art. For example, the negative electrode active material may include at least one of artificial graphite, natural graphite, soft carbon, hard carbon, a silicon-based material, a tin-based material, lithium titanate, or the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tin-oxygen compound, and a tin alloy. However, the present application is not limited to these materials, and other conventional materials useful as negative electrode materials for batteries can also be used. These negative electrode materials may be used alone or in combination of two or more thereof.

In some embodiments, the negative electrode film layer further optionally comprises a binder. The binder may be at least one selected from styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be at least one selected from superconducting carbon, acetylene black, carbon black, Ketjen black, carbon dot, carbon nanotubes, graphene, and carbon nanofibers.

In some embodiments, the negative electrode film layer may further optionally comprise other auxiliaries, for example, a thickener (e. g., sodium carboxymethyl cellulose (CMC-Na)) and the like.

In some embodiments, the negative electrode sheet can be prepared by dispersing the components for preparing the negative electrode film layer, for example, the negative electrode material, the conductive agent, the binder and any other components in a solvent (for example, deionized water) to form a negative electrode slurry; and applying the negative electrode slurry on a negative electrode current collector, followed by oven drying, cold pressing and other procedures, to obtain the negative electrode sheet.

[Electrolyte]

The electrolyte serves to conduct ions between the positive electrode sheet and the negative electrode sheet. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolyte solution further optionally comprises an additive. For example, the additive may include a negative electrode film-forming additive, a positive electrode film-forming additive, and also include additives that can improve certain battery performances, such as an additive that improves the overcharge performance of the battery, an additive that improves the high- or low-temperature performance of the battery, and the like.

[Separator]

In some embodiments, the secondary battery further includes a separator. The type of the separator is not particularly limited in the present application, and any well-known separator with a porous structure having good chemical stability and mechanical stability may be selected.

In some embodiments, the material of the separator may be at least one selected from polyethylene, polypropylene, polyvinylidene fluoride, aramid fiber, polyethylene terephthalate, polytetrafluoroethylene, polyacrylonitrile, polyimide, polyamide, polyester, and natural fiber. The separator may be a single-layer film or a multi-layer composite film, which is not particularly limited. When the separator is a multi-layer composite film, the material of each layer may be the same or different, which is not particularly limited.

In some embodiments, the positive electrode sheet, the negative electrode sheet, and the separator can be made into an electrode assembly by a winding process or a lamination process.

[Secondary battery]

The present application provides a secondary battery, which includes the positive electrode sheet described in the present application.

In some embodiments, the secondary battery may include an outer package. The outer package can be used to encapsulate the above-mentioned electrode assembly and electrolyte.

In some embodiments, the outer package of the secondary battery may be a hard case, such as a hard plastic case, an aluminium case, a steel case, and the like. The outer package of the secondary battery can also be a soft pack, such as a bag-type soft pack. The material of the soft pack can be a plastic, and examples of the plastic include polypropylene, polybutylene terephthalate, and polybutylene succinate.

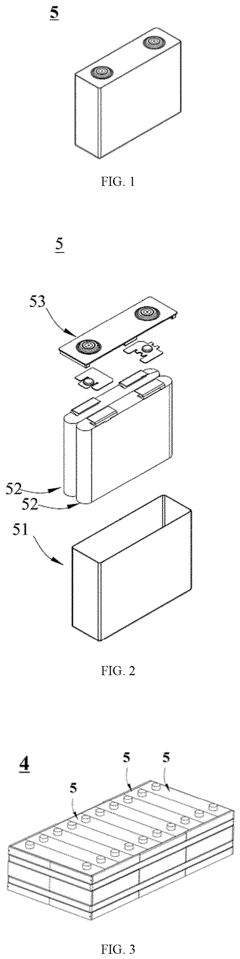

The shape of the secondary battery is not particularly limited in the present application, and it may be cylindrical, square, or any other shape. For example, Fig. 1 shows an example of a secondary battery 5 having a square structure. Fig. 2 is an exploded view of the secondary battery 5.

In some embodiments, referring to Fig. 2, an outer package may include a case 51 and a cover plate 53. Here, the case 51 can include a bottom plate and a side plate connected to the bottom plate, where the bottom plate and the side plate define an accommodating cavity. The case 51 has an opening that communicates with the accommodating cavity, and the cover plate 53 can cover the opening to close the accommodating cavity. The positive electrode sheet, the negative electrode sheet, and the separator may be wound or stacked to form an electrode assembly 52. The electrode assembly 52 is enclosed in the accommodating cavity. An electrolyte composition as a non-Newtonian fluid is impregnated in the electrode assembly 52. The number of electrode assemblies 52 comprised in the secondary battery 5 may be one or more, which can be selected by those skilled in the art according to specific actual requirements.

[Battery module]

In some embodiments, secondary batteries can be assembled into a battery module, the number of secondary batteries contained in the battery module can be one or more, and the specific number can be selected by those skilled in the art according to the application and capacity of the battery module.

Fig. 3 shows an example of a battery module 3. Referring to Fig. 3, in the battery module 4, multiple secondary batteries 5 may be sequentially arranged along the length direction of the battery module 4. Of course, they can be arranged in any other way. Multiple secondary batteries 5 may further be fixed by fasteners.

In one embodiment, the battery module 4 may further include a shell having an accommodating space, in which the multiple secondary batteries 5 are accommodated.

[Battery pack]

In some embodiments, the battery module may further be assembled into a battery pack, the number of battery module contained in the battery pack may be one or more, and the specific number can be selected by those skilled in the art according to the use and capacity of the battery pack.

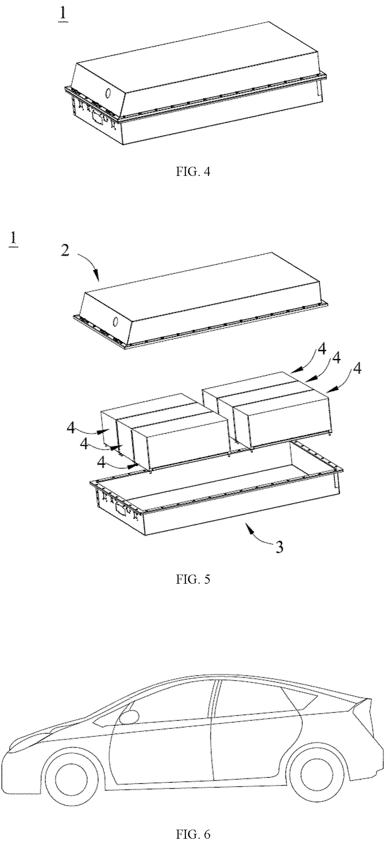

Figs. 4 and 5 show an example of a battery pack 1. Referring to Figs. 4 and 5, the battery pack 1 may include a battery box and multiple battery modules 4 provided in the battery box. The battery box includes an upper box 2 and a lower box 3, where the upper box 2 can cover the lower box 3, and defines an enclosed space for accommodating the battery module 4. The multiple battery modules 4 may be arranged in the battery box in any manner.

[Power consuming apparatus]

The present application provides a power consuming apparatus, which includes the secondary battery described in the present application.

In some embodiments, the power consuming apparatus includes at least one of the secondary battery according to any embodiment, the battery module according to any embodiment, or the battery pack according to any embodiment.

The secondary battery, battery module, or battery pack can be used as a power source for the power consuming apparatus, and can also be used as an energy storage unit for the power consuming apparatus. The power consuming apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, and an energy storage system, etc.

For the power consuming apparatus, the secondary battery, the battery module, or the battery pack can be selected according to the requirements during use.

Fig. 6 shows an example of a power consuming apparatus. The power consuming apparatus is an all-electric vehicle, a hybrid electric vehicle, or a plug-in hybrid electric vehicle, etc. In order to meet the requirements of the power consuming apparatus for high power and high energy density of secondary batteries, a battery pack or a battery module may be used.

The device may also be, for example, a mobile phone, a tablet computer, and a laptop, etc. The device is generally required to be light and thin, and can use a secondary battery as a power source.

**Examples**

Examples of the present application will be described hereinafter. The examples described below are exemplary and only used to explain the present application, and should not be construed as a limitation on the present application. Where specific techniques or conditions are not indicated in the examples, the techniques or conditions described in the literatures in the art or described in the product specifications are followed. The reagents or instruments for which no manufacturers are noted are all common products commercially available from the market.

**I. Preparation method**

Example 1

1) Preparation of precursor material

Preparation of solutions: Nickel sulfate, cobalt sulfate and manganese sulfate were prepared into a 1.5 mol/L mixed salt solution according to a molar ratio of Ni:Co:Mn =96:3:1. Antimony sulfate was prepared into an antimony salt solution with a concentration of 0.75mol/L. A 5 mol/L NaOH solution was used as an alkali precipitant and 2 mol/L aqueous ammonia was used as a complexing agent.

Preparation of base reaction solution: 10 L deionized water was added into a 20 L controlled crystallization reactor. A certain amount of concentrated aqueous ammonia was added to give an ammonia concentration of 0.65mol/L in the reactor. A certain amount of a NaOH solution was added to adjust the pH in the reactor to 11. A base reaction solution was thus obtained.

First co-precipitation reaction: Under a nitrogen atmosphere, the base reaction solution was heated to 75°C. The mixed salt solution, the alkali solution, the aqueous ammonia and the surfactant polyvinylpyrrolidone (PVP) were added to the base reaction solution parallely with stirring at 350 rpm. The content in percentage by weight of PVP was 0.5%, based on the total weight of nickel sulfate, cobalt sulfate, and manganese sulfate added. By adjusting the flow rate of the mixed salt solution, the alkali solution and the aqueous ammonia, the pH of the reaction solution was controlled to 11. The concentration of the aqueous ammonia was 0.65 mol/L. The pumping was stopped until a first target particle size Dv50 (9.5 $\mu$m) was achieved in the reaction, to obtain a precursor mother liquor.

Second co-precipitation reaction: The antimony salt solution, the alkali solution, and the aqueous ammonia were added again at a reaction temperature of 75°C and a stirring speed of 350 rpm. The pH of the reaction solution was controlled to 11. The concentration of the aqueous ammonia was 0.65 mol/L. The feeding was stopped after a second target particle size Dv50 (10.5$\mu$m) was achieved in the reaction.

Post-treatment: The reaction solution was allowed to stand for 24 hrs to obtain an aged slurry containing the precursor material, and the precursor material was obtained after washing and drying.

2) Preparation of positive electrode material

LiOH•H$_2$O, the precursor material, and Sb$_2$O$_3$ were evenly mixed according to a molar ratio of 1.05:1:0.0024, and then sintered in a box furnace at 800°C for 15 hrs under a pure oxygen atmosphere. A ternary positive electrode material was obtained after crushing and sieving.

3) Preparation of positive electrode sheet

The prepared positive electrode material, the conductive carbon black and the binder PVDF were dispersed in the solvent N-methylpyrrolidone (NMP) according to a weight ratio of 90:5:5 and mixed evenly to obtain a positive electrode slurry. The positive electrode slurry was evenly coated on an aluminum foil as a positive electrode current collector, dried, and then cold-pressed to obtain a positive electrode sheet.

4) Preparation of negative electrode sheet

The negative electrode active material artificial graphite, hard carbon, the conductive agent acetylene black, the binder SBR, and the thickener carboxymethylcellulose sodium (CMC) were mixed uniformly at a weight ratio of 90: 5:2:2:1 by fully stirring in deionized water as a solvent, and then applied to a Cu foil, dried, and cold pressed to obtain a negative electrode sheet.

5) Electrolyte solution

Ethylene carbonate (EC), diethyl carbonate (DEC), and dimethyl carbonate (DMC) were mixed at a weight ratio of 1:1:1, to obtain a solvent. Then a lithium salt LiPF$_6$ was dissolved in the solvent, to obtain an electrolyte solution in which the concentration of LiPF$_6$ was 1 mol/L.

6) Separator

A polypropylene film was used as a separator.

7) Preparation of full battery

The positive electrode sheet, the separator and the negative electrode sheet in Example 1 were stacked sequentially so that the separator was located between the positive electrode sheet and the negative electrode sheet for separation. Then they were wound to obtain a bare battery core. The bare battery core was welded with tabs, filled into an aluminum package, and baked at 80°C to remove water,

Then, the electrolyte solution was immediately injected, and the opening was sealed, to obtain an uncharged battery. The uncharged battery was then subjected to standing, hot and cold pressing, chemical formation, shaping, capacity test, and other procedures in sequence to obtain a lithium ion battery product of Example 1.

Examples 2-28

The preparation method of the batteries of Examples 2 to 28 was similar to that of the battery of Example 1, except that the preparation parameters of the precursor material were adjusted. Specific parameters were shown in Tables 1 and 2.

Comparative example 1-2

The preparation method of the batteries of Comparative Examples 1 and 2 was similar to that of the battery of Example 1, except that the preparation parameters of the precursor material were adjusted. Specific parameters were shown in Tables 1 and 2.

Comparative Example 3

The preparation method of the battery of Comparative Example 3 was similar to that of the battery of Example 1, except that the preparation of the precursor material was adjusted. The preparation method was specifically as follows.
Preparation of solutions: Nickel sulfate, cobalt sulfate and manganese sulfate were prepared into a 1.5 mol/L mixed salt solution according to a molar ratio of Ni:Co:Mn =96:2:2. A 5 mol/L NaOH solution was used as an alkali solution and 2 mol/L aqueous ammonia was used as a complexing agent.
Preparation of base reaction solution: 10 L deionized water was added into a 20 L controlled crystallization reactor. A certain amount of concentrated aqueous ammonia was added to give an ammonia concentration of 0.65mol/L in the reactor. A certain amount of a NaOH solution was added to adjust the pH in the reactor to 11. A base reaction solution was thus obtained.
Co-precipitation reaction: Under a nitrogen atmosphere, the base reaction solution was heated to 75°C. The mixed salt solution, the alkali solution, the aqueous ammonia and the surfactant polyvinylpyrrolidone (PVP) were added to the base reaction solution parallely with stirring at 350 rpm. By adjusting the flow rate of the mixed salt solution, the alkali solution and the aqueous ammonia, the pH of the reaction solution was controlled to 11. The concentration of the aqueous ammonia was 0.65 mol/L. The pumping was stopped until a target particle size Dv50 (10.5 $\mu$m) was achieved in the reaction.
Post-treatment: The reaction solution was allowed to stand for 24 hrs to obtain an aged slurry containing the precursor material, and the precursor material was obtained after washing and drying.

Comparative Example 4

The preparation method of the battery of Comparative Example 4 was similar to that of the battery of Example 1, except that the preparation of the precursor material was adjusted. The preparation method was specifically as follows.
Nickel sulfate, cobalt sulfate and manganese sulfate were prepared into a 1.5 mol/L mixed salt solution according to a molar ratio of Ni:Co:Mn =96:3:1. Sodium tungstate was prepared into an antimony salt solution with a concentration of 0.75mol/L. A 5 mol/L NaOH solution was used as an alkali solution and 2 mol/L aqueous ammonia water was used as a complexing agent.
10 L deionized water was added into a 20 L controlled crystallization reactor. A certain amount of concentrated aqueous ammonia was added to give an ammonia concentration of 0.65mol/L in the reactor. A certain amount of a NaOH solution was added to adjust the pH in the reactor to 11. A base reaction solution was thus obtained.
Under a nitrogen atmosphere, the base reaction solution was heated to 75°C. The mixed salt solution, the alkali solution, and the aqueous ammonia were added to the base reaction solution with stirring at 350 rpm. By adjusting the flow rate of the mixed salt solution, the alkali solution and the aqueous ammonia, the pH of the reaction solution was controlled to 11. The concentration of the aqueous ammonia was 0.65 mol/L. The pumping was stopped until a first target particle size Dv50 (9.5 $\mu$m) was achieved in the reaction, to obtain a precursor mother liquor.
The antimony salt solution, the alkali solution, and the aqueous ammonia were added again at a reaction temperature of 75°C and a stirring speed of 350 rpm. The pH of the reaction solution was controlled to 11. The concentration of the aqueous ammonia was 0.65 mol/L. The feeding was stopped after a second target particle size Dv50 (10. 5$\mu$m) was achieved in the reaction.
Post-treatment: The reaction solution was allowed to stand for 24 hrs to obtain an aged slurry containing the precursor material, and the precursor material was obtained after washing and drying.

**II. Performance test**

1. Performance test of precursor material

1) Chemical formula

Inductively coupled plasma optical emission spectrometer (ICP-OES), model ICAP7400 from Thermo Fisher Scientific Company was used. 1 g of the sample was weighed into a beaker, 25 ml of a 25 vol% $HNO_3$ solution was added to dissolve the sample, and diluted with 475 ml of deionized water. Then, the diluted solution was subjected to target element analysis, and the chemical formula of the precursor material was calculated.

2) Number $N_{101}$ of layers of (101) plane

X-ray diffraction (XRD) test conditions: Cu target, tube voltage 40 V, tube current 40 mA, scanning speed <2°/min, scanning range of 20 15°-70°, step length 0.02°, discharge slit (DS) 1mm, anti-scattering slit (SS) 8mm, and graphite monochromator.

After fitting the XRD pattern of the precursor material, the grain size $D_{101}$ of the (101) plane was calculated: $D_{101}=k\lambda/(B_{101}*\cos\theta_{101})$, where $B_{101}$ was the half-peak width of the diffraction peak of the (101) plane of the precursor material, k was a coefficient (generally 0.89-0.90), $\theta_{101}$ was the diffraction angle at the diffraction peak of the plane (101) of the precursor material, and $\lambda$ was the wavelength of the copper target. Then the corresponding value was calculated.

After fitting the XRD pattern of the precursor material, the interlayer spacing $d_{101}$ of the (101) plane was calculated: $d_{101=}n\lambda/(2*\sin\theta_{101})$, where $\theta_{101}$ was the diffraction angle at the diffraction peak of the (101) plane of the precursor material, and $\lambda$ was the wavelength of the copper target. Then the corresponding value was calculated.

After summarizing the above parameters, the number of layers of the (101) plane was obtained: $N_{101}=D_{101}/d_{101}$

3) Grain size ratio of (100) plane to (001) plane

X-ray diffraction (XRD) test conditions: Cu target, tube voltage 40 V, tube current 40 mA, scanning speed <2°/min, scanning range of 20 15°-70°, step length 0.02°, discharge slit (DS) 1mm, anti-scattering slit (SS) 8mm, and graphite monochromator.

After fitting the XRD pattern of the precursor material, the grain size $D_{100}$ of the (100) plane was calculated: $D_{100}=k\lambda/(B_{100}*\cos\theta_{100})$, where $B_{101}$ was the half-peak width of the diffraction peak of the (100) plane of the precursor material, k was a coefficient (generally 0.89-0.90), $\theta_{101}$ was the diffraction angle at the diffraction peak of the plane (100) of the precursor material, and $\lambda$ was the wavelength of the copper target. Then the corresponding value was calculated.

After fitting the XRD pattern of the precursor material, the grain size $D_{001}$ of the (001) plane was calculated: $D_{001}=k\lambda/(B_{001}*\cos\theta_{001})$, where $B_{001}$ was the half-peak width of the diffraction peak of the plane (001) of the precursor material, k was a coefficient (generally 0.89-0.90), $\theta_{101}$ was the diffraction angle at the diffraction peak of the plane (001) of the precursor material, and $\lambda$ was the wavelength of the copper target. Then the corresponding value was calculated.

The grain size ratio $D_{100}/D_{001}$ of the (100) to (001) plane was obtained after the above parameters were summarized.

4) Pore volume

GB/T 21650.2-2008 Pore size distribution and porosity of solid materials by mercury porosimetry and gas adsorption-Part 2: Analysis of mesopores and macropores by gas adsorption was used. A certain weight of the sample was weighed, and added to a true density tester. The test system was sealed, and helium or nitrogen was introduced according to the procedure. By detecting the pressure of gas in the sample chamber and expansion chamber, the true volume was calculated according to Bohr's law (PV=nRT).

5) Deformation fault probability $f_D$

X-ray diffraction (XRD) test conditions: Cu target, tube voltage 40 V, tube current 40 mA, scanning speed <2°/min, scanning range of 20 15°-70°, step length 0.02°, discharge slit (DS) 1mm, anti-scattering slit (SS) 8mm, and graphite monochromator.

After fitting the XRD pattern of the precursor material, the deformation fault probability $f_D$ was calculated:

$$f_D = 8.89645 \times B_{101} \times \frac{\pi}{180} - 1.85325 \times B_{102} \times \frac{\pi}{180} - \frac{43.9925}{D_{001}}$$

where $B_{101}$ was the half-height width of the diffraction peak of the (101) plane of the precursor material, $B_{102}$ was the half-

height width of the diffraction peak of the (102) plane of the precursor material, and $D_{001}$ was the grain size of the diffraction peak of the (001) plane of the precursor material. Then the corresponding value was calculated.

6) Dv50

According to GB/T 19077-2016 Particle size analysis-laser diffraction method, 0.1g to 0.13g of the composite positive electrode material to be tested was weighed into a 50 mL beaker, 5g of absolute ethanol was added, and then a stirring rod of about 2.5 mm was added and sealed with a plastic wrap. The sample was sonicated for 5 min, transferred to a magnetic stirrer, and stirred at 500 rpm for 20 min or more. 2 samples were tested for each batch of product. The Malvern 3000 laser particle size analyzer from Malvern Instruments Inc. was used for test. Dv50 was the corresponding particle size when the cumulative volume distribution percentage of secondary particles of the composite positive electrode material reached 50%.

7) Specific surface area

The specific surface area was tested by the gas adsorption method according to the test standard GB/T19587-2017. Specifically, the precursor material was taken as a sample, and the sample tube was immersed in liquid nitrogen at -196°C. Under a relative pressure of 0.05-0.30, the adsorption amount of nitrogen on the solid surface under different pressures was determined. Based on the BET multilayer adsorption theory and formula, the monolayer adsorption amount of the sample was obtained, and the specific surface area of the precursor material was calculated.

8) Intensity ratio of diffraction peaks of (001) plane to (101) plane

The XRD pattern of the tested sample was scanned at a slow speed (< 2°/min), and the image was processed by smoothing and filtering. Then the integral areas $I_{001}$ and $I_{101}$ of diffraction peaks of the (001) plane and (101) plane were obtained, and the intensity ratio of diffraction peaks of the (001) plane to (101) plane was calculated by ($I_{001}/I_{101}$).

2. Positive electrode material

1) Determination of chemical formula of positive electrode material

Inductively coupled plasma optical emission spectrometer (ICP-OES), model ICAP7400 from Thermo Fisher Scientific Company was used. 1 g of the sample was weighed into a beaker, 25 ml of a 25 vol% $HNO_3$ solution was added to dissolve the sample, and diluted with 475 ml of deionized water. Then, the diluted solution was subjected to target element analysis, and the chemical formula of the positive electrode material was obtained by calculation.

2) Microstrain

X-ray diffraction (XRD) test conditions: Cu target, tube voltage 40 V, tube current 40 mA, scanning speed <2°/min, scanning range of 20 15°-70°, step length 0.02°, discharge slit (DS) 1mm, anti-scattering slit (SS) 8mm, and graphite monochromator.
The microstrain was obtained by fitting the XRD pattern :$MS=(B_{hkl}*Cos\theta_{hkl})/(4sin\theta_{hkl})$, where $\theta_{hkl}$ was the diffraction angle of the (hkl) plane in the XRD pattern of the positive electrode material, and $B_{hkl}$ was the half-height width of the (hkl) plane in the XRD pattern of the positive electrode material.

3) Aspect ratio of primary particles

Static image processing technology: The scanning electron microscopy images of static primary particles was intelligently recognized by software, to obtain the major diameter RL and minor diameter RS of primary particles, and then the aspect ratio =RL/RS was calculated.

2. Battery performance test

1) Test of initial gravimetic capacity of full battery

At a constant-temperature of 25°C, the battery was allowed to stand for 5min, discharged to 2.8V at 1/3C, allowed to stand for 5min, charged to 4.25V at 1/3C, then constant-voltage charged to a current of ≤0.05C at 4.25V, allowed to stand for 5min, and then discharged to 2.8V at 1/3C. The discharge capacity at this time was the initial gravimetic capacity, and designated as D0.

2) Test of cycle capacity retention rate at 45°C

At 45°C, the battery was charged to 4.25 V at a constant current of 1C, then charged at a constant voltage of 4.25 V until the current dropped to 0.05 C, and then discharged to 2.8 V at a constant current of 1C, to obtain the first-cycle specific discharge capacity (Cd1). After 300 cycles of repeated charge and discharge, the specific discharge capacity of the lithium-ion battery after n cycles was recorded as Cdn. Capacity retention rate = specific discharge capacity (Cdn) after n cycles/specific discharge capacity (Cd1) of the first cycle.

3) Direct current internal resistance

At a constant-temperature of 25°C, the battery was allowed to stand for 5min, discharged to 2.8V at 1/3C, allowed to stand for 5min, charged to 4.25V at 1/3C, then constant-voltage charged to a current of ≤0.05C at 4.25V, allowed to stand for 5min, and then discharged to 2.8V at 1/3C. The discharge capacity at this time was designated as D0.
At a constant-temperature of 25°C, the battery was allowed to stand for 30min, charged to 4.25V at a current of 1/3D0, then charged at a constant voltage of 4.25V until the current was ≤0.05D0, allowed to stand for 30min, then discharged to 0.5D0 at a current of 1/3D0, and allowed to stand for 10min.
The battery was allowed to stand for 120 min at a constant temperature of -25°C, and discharged for 10s at a current of 0.36D0. The voltage change $\Delta U$ at this time was recorded. According to the ohm formula, the direct current internal resistance at 50% SOC and -25°C was calculated: $R_{50\%}=\Delta U/(0.36D0)$

### III. Analysis of test results of examples and comparative examples

In accordance with the above methods, the batteries of the examples and comparative examples were prepared, and tested for various performance parameters. The results are shown in Table 3 below.

Table 1. Preparation parameters of precursor material

| No. | Chemical formula of precursor material | First co-precipitation reaction | | | | | | Second co-precipitation reaction | | | | |
|---|---|---|---|---|---|---|---|---|---|---|---|---|
| | | Mixed salt (mol/L) | pH | Temperature (°C) | Concentration of complexing agent in reaction system (mol/L) | PVP (%) | Dv50 (μm) | M salt (mol/L) | PH | Temperature (°C) | Concentration of complexing agent in reaction system (mol/L) | Dv50 (μm) |
| Example 1 | $Ni_{0.96}Co_{0.02}Mn_{0.018}Sb_{0.002}(OH)_2$ | 1.5 | 11.0 | 75 | 0.65 | 0.50% | 9.5 | 0.75 | 11.0 | 75 | 0.65 | 10.5 |
| Example 2 | $Ni_{0.96}Co_{0.02}Mn_{0.018}Sb_{0.002}(OH)_2$ | 4.0 | 11.5 | 65 | 0.65 | 0.50% | 9.5 | 1.00 | 11.0 | 75 | 0.65 | 10.5 |
| Example 3 | $Ni_{0.96}Co_{0.02}Mn_{0.018}Sb_{0.002}(OH)_2$ | 3.0 | 11.5 | 65 | 0.65 | 0.50% | 9.5 | 0.75 | 11.0 | 75 | 0.65 | 10.5 |
| Example 4 | $Ni_{0.96}Co_{0.02}Mn_{0.018}Sb_{0.002}(OH)_2$ | 1.5 | 10.0 | 75 | 0.65 | 0.50% | 9.5 | 0.75 | 10.0 | 75 | 0.65 | 10.5 |
| Example 5 | $Ni_{0.96}Co_{0.02}Mn_{0.018}Sb_{0.002}(OH)_2$ | 1.5 | 8.5 | 75 | 0.65 | 0.50% | 9.5 | 0.75 | 8.5 | 75 | 0.65 | 10.5 |
| Example 6 | $Ni_{0.96}Co_{0.02}Mn_{0.018}Sb_{0.002}(OH)_2$ | 2.5 | 9.0 | 85 | 0.65 | 0.50% | 9.5 | 0.75 | 9.0 | 85 | 0.65 | 10.5 |
| Example 7 | $Ni_{0.96}Co_{0.02}Mn_{0.018}Sb_{0.002}(OH)_2$ | 2.5 | 10.0 | 85 | 0.65 | 0.50% | 9.5 | 0.75 | 9.0 | 85 | 0.65 | 10.5 |
| Example 8 | $Ni_{0.96}Co_{0.02}Mn_{0.018}Sb_{0.002}(OH)_2$ | 2.5 | 11.0 | 85 | 0.65 | 0.50% | 9.5 | 0.75 | 9.0 | 85 | 0.65 | 10.5 |
| Example 9 | $Ni_{0.96}Co_{0.02}Mn_{0.018}Sb_{0.002}(OH)_2$ | 1.0 | 11.5 | 65 | 0.65 | 0.50% | 9.5 | 0.75 | 11.0 | 65 | 0.65 | 10.5 |

(continued)

| No. | Chemical formula of precursor material | First co-precipitation reaction | | | | | | Second co-precipitation reaction | | | | |
| --- | --- | --- | --- | --- | --- | --- | --- | --- | --- | --- | --- | --- |
| | | Mixed salt (mol/L) | pH | Temperature (°C) | Concentration of complexing agent in reaction system (mol/L) | PVP (%) | Dv50 (μm) | M salt (mol/L) | PH | Temperature (°C) | Concentration of complexing agent in reaction system (mol/L) | Dv50 (μm) |
| Example 10 | $Ni_{0.96}Co_{0.02}Mn_{0.018}Sb_{0.002}(OH)_2$ | 1.0 | 11.0 | 65 | 0.65 | 0.50% | 9.5 | 0.75 | 11.0 | 65 | 0.65 | 10.5 |
| Example 11 | $Ni_{0.96}Co_{0.02}Mn_{0.018}Sb_{0.002}(OH)_2$ | 1.5 | 10.5 | 65 | 0.65 | 0.50% | 9.5 | 0.75 | 11.0 | 65 | 0.65 | 10.5 |
| Example 12 | $Ni_{0.96}Co_{0.02}Mn_{0.018}Sb_{0.002}(OH)_2$ | 1.0 | 11.5 | 75 | 0.65 | 0.50% | 2.5 | 0.75 | 11.0 | 75 | 0.65 | 3.0 |
| Example 13 | $Ni_{0.96}Co_{0.02}Mn_{0.018}Sb_{0.002}(OH)_2$ | 1.5 | 11.5 | 75 | 0.85 | 0.50% | 14 | 0.75 | 11.0 | 75 | 0.85 | 15.0 |
| Example 14 | $Ni_{0.96}Co_{0.02}Mn_{0.018}Sb_{0.002}(OH)_2$ | 1.0 | 11.5 | 75 | 1.00 | 0.50% | 18 | 0.75 | 11.0 | 75 | 1.00 | 20.0 |
| Example 15 | $Ni_{0.96}Co_{0.02}Mn_{0.018}Sb_{0.002}(OH)_2$ | 2.5 | 11.0 | 70 | 0.50 | 0.50% | 9.5 | 0.75 | 11.0 | 75 | 0.65 | 10.5 |
| Example 16 | $Ni_{0.96}Co_{0.02}Mn_{0.018}Sb_{0.002}(OH)_2$ | 1.5 | 11.0 | 70 | 0.60 | 0.50% | 9.5 | 0.75 | 11.0 | 75 | 0.65 | 10.5 |
| Example 17 | $Ni_{0.96}Co_{0.02}Mn_{0.018}Sb_{0.002}(OH)_2$ | 1.5 | 11.0 | 70 | 0.80 | 0.50% | 9.5 | 0.75 | 11.0 | 75 | 0.65 | 10.5 |
| Example 18 | $Ni_{0.96}Co_{0.02}Mn_{0.018}Sb_{0.002}(OH)_2$ | 1.5 | 11.0 | 70 | 0.90 | 0.50% | 9.5 | 0.75 | 11.0 | 75 | 0.65 | 10.5 |

(continued)

| No. | Chemical formula of precursor material | First co-precipitation reaction | | | | | | Second co-precipitation reaction | | | | |
|---|---|---|---|---|---|---|---|---|---|---|---|---|
| | | Mixed salt (mol/L) | pH | Temperature (°C) | Concentration of complexing agent in reaction system (mol/L) | PVP (%) | Dv50 (μm) | M salt (mol/L) | PH | Temperature (°C) | Concentration of complexing agent in reaction system (mol/L) | Dv50 (μm) |
| Example 19 | $Ni_{0.96}Co_{0.02}Mn_{0.018}Sb_{0.002}(OH)_2$ | 2.5 | 10.5 | 85 | 0.80 | 0.50% | 9.5 | 0.75 | 11.0 | 75 | 0.65 | 10.5 |
| Example 20 | $Ni_{0.96}Co_{0.02}Mn_{0.018}Sb_{0.002}(OH)_2$ | 1.0 | 9.5 | 85 | 0.80 | 0.50% | 9.5 | 0.75 | 11.0 | 75 | 0.65 | 10.5 |
| Example 21 | $Ni_{0.96}Co_{0.02}Mn_{0.018}Sb_{0.002}(OH)_2$ | 5.0 | 11.5 | 85 | 0.80 | 0.50% | 9.5 | 0.75 | 11.0 | 75 | 0.65 | 10.5 |
| Example 22 | $Ni_{0.96}Co_{0.02}Mn_{0.018}Sb_{0.002}(OH)_2$ | 1.5 | 11.0 | 75 | 0.65 | 0.10% | 9.5 | 0.75 | 11.0 | 75 | 0.65 | 10.5 |
| Example 23 | $Ni_{0.96}Co_{0.02}Mn_{0.018}Sb_{0.002}(OH)_2$ | 1.5 | 11.0 | 75 | 0.65 | 5.00% | 9.5 | 0.75 | 11.0 | 75 | 0.65 | 10.5 |
| Example 24 | $Ni_{0.96}Co_{0.02}Mn_{0.018}Sb_{0.002}(OH)_2$ | 1.5 | 11.0 | 75 | 0.65 | 0.25% | 9.5 | 0.75 | 11.0 | 75 | 0.65 | 10.5 |
| Example 25 | $Ni_{0.96}Co_{0.02}Mn_{0.018}Sb_{0.002}(OH)_2$ | 1.5 | 11.0 | 75 | 0.65 | 2.30% | 9.5 | 0.75 | 11.0 | 75 | 0.65 | 10.5 |
| Example 26 | $Ni_{0.96}Co_{0.02}Mn_{0.018}Sb_{0.002}(OH)_2$ | 1.5 | 11.0 | 75 | 0.65 | 0.50% | 9.5 | 0.75 | 11.0 | 75 | 0.65 | 10.5 |
| Example 27 | $Ni_{0.96}Co_{0.02}Mn_{0.018}Sb_{0.002}(OH)_2$ | 1.5 | 11.0 | 75 | 0.65 | 0.50% | 9.5 | 0.75 | 11.0 | 75 | 0.65 | 10.5 |

(continued)

| No. | Chemical formula of precursor material | First co-precipitation reaction | | | | | | Second co-precipitation reaction | | | | |
|---|---|---|---|---|---|---|---|---|---|---|---|---|
| | | Mixed salt (mol/L) | pH | Temperature (°C) | Concentration of complexing agent in reaction system (mol/L) | PVP (%) | Dv50 (μm) | M salt (mol/L) | PH | Temperature (°C) | Concentration of complexing agent in reaction system (mol/L) | Dv50 (μm) |
| Example 28 | $Ni_{0.90}Co_{0.03}Mn_{0.062}Sb_{0.008}(OH)_2$ | 1.5 | 11.0 | 75 | 0.65 | 0.50% | 9.5 | 0.75 | 11.0 | 75 | 0.65 | 10.5 |
| Comparative Example 1 | $Ni_{0.96}Co_{0.02}Mn_{0.018}Sb_{0.002}(OH)_2$ | 5.0 | 11.5 | 90 | 0.40 | 0.50% | 9.5 | 0.75 | 11.5 | 90 | 0.40 | 10.5 |
| Comparative Example 2 | $Ni_{0.96}Co_{0.02}Mn_{0.018}Sb_{0.002}(OH_2)$ | 5.0 | 7.5 | 90 | 0.40 | 0.50% | 9.5 | 0.75 | 7.5 | 90 | 0.40 | 10.5 |
| Comparative Example 3 | $Ni_{0.96}Co_{0.02}Mn_{0.02}(OH)_2$ | 1.5 | 11.0 | 75 | 0.65 | 0.50% | 9.5 | / | / | / | / | / |
| Comparative Example 4 | $Ni_{0.96}Co_{0.02}Mn_{0.018}Sb_{0.002}(OH)_2$ | 1.5 | 8.5 | 55 | 0.50 | / | 9.5 | 0.75 | 8.5 | 55 | 0.50 | 10.5 |

Table 2. Parameters of precursor material and positive electrode material

| No. | Precursor material | | | | | | | Positive electrode material | | |
|---|---|---|---|---|---|---|---|---|---|---|
| | Number of layers of (101) plane | Grain size ratio of (100) plane to (001) plane | Pore volume $(cm^3/g)$ | fD (%) | Dv50 $(\mu m)$ | Specific surface area $(m^2/g)$ | Intensity ratio of diffraction peaks of (001) plane to (101) plane | Chemical formula | Residual strain (%) | Aspect ratio of primary particles |
| Example 1 | 40 | 5.0 | 0.030 | 3.0% | 10.5 | 10.0 | 1.00 | $LiNi_{0.96}Co_{0.02}Mn_{0.02}Sb_{0.002}O_2$ | 0.18% | 2.50 |
| Example 2 | 20 | 4.8 | 0.028 | 3.4% | 10.5 | 9.5 | 1.15 | $LiNi_{0.96}Co_{0.02}Mn_{0.02}Sb_{0.002}O_2$ | 0.18% | 2.50 |
| Example 3 | 25 | 4.8 | 0.028 | 3.4% | 10.5 | 9.5 | 1.15 | $LiNi_{0.96}Co_{0.02}Mn_{0.02}Sb_{0.002}O_2$ | 0.18% | 2.50 |
| Example 4 | 55 | 4.8 | 0.028 | 3.5% | 10.5 | 9.5 | 1.12 | $LiNi_{0.96}Co_{0.02}Mn_{0.02}Sb_{0.002}O_2$ | 0.18% | 2.50 |
| Example 5 | 70 | 4.8 | 0.028 | 3.5% | 10.5 | 9.5 | 0.96 | $LiNi_{0.96}Co_{0.02}Mn_{0.02}Sb_{0.002}O_2$ | 0.18% | 2.50 |
| Example 6 | 50 | 1.5 | 0.037 | 9.0% | 10.5 | 13.0 | 1.20 | $LiNi_{0.96}Co_{0.02}Mn_{0.02}Sb_{0.002}O_2$ | 0.92% | 1.80 |
| Example 7 | 50 | 2.0 | 0.037 | 7.0% | 10.5 | 13.0 | 1.20 | $LiNi_{0.96}Co_{0.02}Mn_{0.02}Sb_{0.002}O_2$ | 0.46% | 1.80 |
| Example 8 | 50 | 4.4 | 0.037 | 4.0% | 10.5 | 13.0 | 1.20 | $LiNi_{0.96}Co_{0.02}Mn_{0.02}Sb_{0.002}O_2$ | 0.24% | 2.30 |
| Example 9 | 60 | 3.2 | 0.010 | 5.3% | 10.5 | 3.6 | 1.03 | $LiNi_{0.96}Co_{0.02}Mn_{0.02}Sb_{0.002}O_2$ | 0.33% | 2.10 |
| Example 10 | 60 | 3.2 | 0.020 | 5.3% | 10.5 | 4.0 | 1.03 | $LiNi_{0.96}Co_{0.02}Mn_{0.02}Sb_{0.002}O_2$ | 0.33% | 2.10 |
| Example 11 | 60 | 3.2 | 0.025 | 5.3% | 10.5 | 8.0 | 1.03 | $LiNi_{0.96}Co_{0.02}Mn_{0.02}Sb_{0.002}O_2$ | 0.33% | 2.10 |
| Example 12 | 45 | 2.8 | 0.030 | 5.8% | 3.0 | 20.0 | 1.12 | $LiNi_{0.96}Co_{0.02}Mn_{0.02}Sb_{0.002}O_2$ | 0.41% | 1.90 |
| Example 13 | 45 | 2.8 | 0.025 | 5.8% | 15.0 | 9.0 | 1.12 | $LiNi_{0.96}Co_{0.02}Mn_{0.02}Sb_{0.002}O_2$ | 0.41% | 1.90 |
| Example 14 | 45 | 2.8 | 0.025 | 5.8% | 20.0 | 5.0 | 1.12 | $LiNi_{0.96}Co_{0.02}Mn_{0.02}Sb_{0.002}O_2$ | 0.41% | 1.90 |
| Example 15 | 40 | 4.6 | 0.026 | 3.3% | 10.5 | 12.0 | 0.60 | $LiNi_{0.96}Co_{0.02}Mn_{0.02}Sb_{0.002}O_2$ | 0.15% | 3.50 |
| Example 16 | 40 | 5.0 | 0.032 | 2.8% | 10.5 | 11.2 | 0.90 | $LiNi_{0.96}Co_{0.02}Mn_{0.02}Sb_{0.002}O_2$ | 0.17% | 2.60 |
| Example 17 | 40 | 4.8 | 0.030 | 3.6% | 10.5 | 10.5 | 1.18 | $LiNi_{0.96}Co_{0.02}Mn_{0.02}Sb_{0.002}O_2$ | 0.25% | 2.50 |
| Example 18 | 40 | 4.3 | 0.030 | 4.2% | 10.5 | 10.5 | 1.25 | $LiNi_{0.96}Co_{0.02}Mn_{0.02}Sb_{0.002}O_2$ | 0.22% | 2.20 |
| No. | Precursor material | | | | | | | Positive electrode material | | |
| | Number of layers of (101) plane | Grain size ratio of (100) plane to (001) plane | Pore volume $(cm^3/g)$ | fD (%) | Dv50 $(\mu m)$ | Specific surface area $(m^2/g)$ | Intensity ratio of diffraction peaks of (001) plane to (101) plane | Chemical formula | Residual strain (%) | Aspect ratio of primary particles |
| Example 19 | 40 | 3.0 | 0.030 | 6.1% | 10.5 | 9.3 | 1.05 | $LiNi_{0.96}Co_{0.02}Mn_{0.02}Sb_{0.002}O_2$ | 0.50% | 2.00 |

| No. | Precursor material | | | | | | | Positive electrode material | | |
| --- | --- | --- | --- | --- | --- | --- | --- | --- | --- | --- |
| | Number of layers of (101) plane | Grain size ratio of (100) plane to (001) plane | Pore volume (cm³/g) | fD (%) | Dv50 (μm) | Specific surface area (m²/g) | Intensity ratio of diffraction peaks of (001) plane to (101) plane | Chemical formula | Residual strain (%) | Aspect ratio of primary particles |
| Example 20 | 40 | 2.1 | 0.030 | 8.5% | 10.5 | 9.3 | 1.05 | $LiNi_{0.96}Co_{0.02}Mn_{0.02}Sb_{0.002}O_2$ | 0.80% | 1.60 |
| Example 21 | 40 | 4.7 | 0.030 | 3.3% | 10.5 | 9.3 | 1.05 | $LiNi_{0.96}Co_{0.02}Mn_{0.02}Sb_{0.002}O_2$ | 0.20% | 2.60 |
| Example 22 | 56 | 2.5 | 0.030 | 2.1% | 10.5 | 10.0 | 1.02 | $LiNi_{0.96}Co_{0.02}Mn_{0.02}Sb_{0.002}O_2$ | 0.12% | 1.50 |
| Example 23 | 27 | 7.8 | 0.030 | 4.9% | 10.5 | 10.0 | 1.16 | $LiNi_{0.96}Co_{0.02}Mn_{0.02}Sb_{0.002}O_2$ | 0.30% | 10.00 |
| Example 24 | 46 | 3.1 | 0.030 | 2.6% | 10.5 | 10.0 | 1.02 | $LiNi_{0.96}Co_{0.02}Mn_{0.02}Sb_{0.002}O_2$ | 0.16% | 2.00 |
| Example 25 | 32 | 4.5 | 0.030 | 3.7% | 10.5 | 10.0 | 1.12 | $LiNi_{0.96}Co_{0.02}Mn_{0.02}Sb_{0.002}O_2$ | 0.20% | 5.00 |
| Example 26 | 45 | 5.0 | 0.025 | 3.1% | 10.5 | 9.3 | 1.00 | $LiNi_{0.96}Co_{0.02}Mn_{0.02}Sb_{0.002}O_2$ | 0.20% | 2.10 |
| Example 27 | 36 | 5.0 | 0.030 | 3.3% | 10.5 | 10.0 | 1.00 | $LiNi_{0.96}Co_{0.02}Mn_{0.02}Sb_{0.002}O_2$ | 0.20% | 2.70 |
| Example 28 | 53 | 4.3 | 0.021 | 3.9% | 10.5 | 8.6 | 1.16 | $LiNi_{0.96}Co_{0.02}Mn_{0.02}Sb_{0.002}O_2$ | 0.21% | 2.30 |
| Comparative Example 1 | 10 | 8.6 | 0.020 | 5.9% | 10.5 | 9.5 | 1.46 | $LiNi_{0.96}Co_{0.02}Mn_{0.02}Sb_{0.002}O_2$ | 0.93% | 6.30 |
| Comparative Example 2 | 80 | 1.1 | 0.006 | 10.8% | 10.5 | 3.3 | 0.59 | $LiNi_{0.96}Co_{0.02}Mn_{0.02}Sb_{0.002}O_2$ | 1.60% | 1.30 |
| Comparative Example 3 | 15 | 7.3 | 0.015 | 6.3% | 9.5 | 3.9 | 0.88 | $LiNi_{0.96}Co_{0.02}Mn_{0.02}O_2$ | 0.51% | 1.52 |
| Comparative Example 4 | 86 | 1.1 | 0.010 | 11.3% | 10.5 | 4.6 | 0.79 | $LiNi_{0.96}Co_{0.02}Mn_{0.02}Sb_{0.002}O_2$ | 1.90% | 1.10 |

Table 3. Performance test result of secondary battery

| No. | Capacity of fully battery at 1/3C (mAh/g) | Direct current internal resistance (mΩ) | Cycle capacity retention rate at 45°C (300cls, %) |
|---|---|---|---|
| Example 1 | 223.0 | 4850 | 91.1% |
| Example 2 | 221.5 | 4960 | 90.6% |
| Example 3 | 221.7 | 4930 | 90.5% |
| Example 4 | 221.6 | 4950 | 90.7% |
| Example 5 | 221.2 | 4960 | 90.9% |
| Example 6 | 221.9 | 4830 | 88.6% |
| Example 7 | 222.0 | 4840 | 89.5% |
| Example 8 | 221.9 | 4830 | 90.1% |
| Example 9 | 220.1 | 5030 | 89.9% |
| Example 10 | 220.6 | 5080 | 90.0% |
| Example 11 | 221.0 | 5060 | 90.0% |
| Example 12 | 224.6 | 4800 | 89.3% |
| Example 13 | 221.5 | 4870 | 89.5% |
| Example 14 | 220.6 | 5030 | 89.6% |
| Example 15 | 222.6 | 4850 | 90.3% |
| Example 16 | 223.1 | 4820 | 90.8% |
| Example 17 | 222.8 | 4860 | 89.7% |
| Example 18 | 222.9 | 4860 | 89.5% |
| Example 19 | 220.0 | 4950 | 89.3% |
| Example 20 | 219.8 | 4960 | 89.0% |
| Example 21 | 221.5 | 4960 | 89.6% |
| Example 22 | 219.6 | 4860 | 90.8% |
| Example 23 | 225.0 | 4830 | 89.5% |
| Example 24 | 222.5 | 4820 | 90.7% |
| Example 25 | 224.0 | 4850 | 89.6% |
| Example 26 | 222.6 | 4970 | 90.8% |
| Example 27 | 222.9 | 4860 | 90.5% |
| Example 28 | 222.1 | 4990 | 89.7% |
| Comparative Example 1 | 219.5 | 5160 | 85.3% |
| Comparative Example 2 | 219.2 | 5360 | 82.3% |
| Comparative Example 3 | 219.3 | 5120 | 85.1% |
| Comparative Example 4 | 219.1 | 5200 | 81.2% |

According to the results in the above table, Examples 1-28 disclose the precursor materials of the present application, and the precursor materials have the following general formula: $Ni_xCo_yMn_zM_a(OH)_2$, where element M includes at least one of Zr, Y, Al, Ti, W, Sr, Ta, Mo, Sb, Nb, Na, K, Ca, Ce, and La, $0.55 \leq x < 1.0$, $0 \leq y < 0.45$, $0 \leq z < 0.45$, $0 < a \leq 0.45$, $a+x+y+z=1$, and the precursor material includes 20-70 layers of (101) planes.

From the comparison of Examples 1-28 with Comparative Examples 1-4, it can be seen that when the precursor material contains element Zr, Y, Al, Ti, W, Sr, Ta, Mo, Sb, Nb, Na, K, Ca, Ce or La, and the precursor material is controlled to have 20-70 layers of (101) planes, the capacity of the battery is effectively improved, the direct current internal resistance of the battery is reduced, the high-temperature cycle capacity retention rate of the battery is increased, and the high-temperature cycle performance of the battery is improved.

From the comparison of Examples 1 and 3-4 with Examples 2 and 5, it can be seen that by controlling the number of layers of (101) planes to 25-55, the capacity of the battery is further improved, and the direct current internal resistance of the battery is reduced.

From the comparison of Examples 7-8 with Example 6, it can be seen that when the deformation fault probability fD of the precursor material is controlled to be less than or equal to 7.0%, the high-temperature cycle capacity retention rate of the battery is increased, and the high-temperature cycle performance of the battery is improved. From the comparison of Example 8 with Examples 6-7, it can be seen that by controlling the deformation fault probability fD of the precursor material to be less than or equal to 4%, the high-temperature cycle capacity retention rate of the battery is further improved, and the high-temperature cycle performance of the battery is improved. From the comparison of Examples 19 and 21 with Example 20, it can be seen that by controlling the deformation fault probability fD of the precursor material to be less than or equal to 7.0%, the high-temperature cycle capacity retention rate of the battery is increased, and the high-temperature cycle performance of the battery is improved. From the comparison of Example 21 with Examples 19 and 20, it can be seen that by controlling the deformation fault probability fD of the precursor material to be less than or equal to 4%, the high-temperature cycle capacity retention rate of the battery is further increased, and the high-temperature cycle performance of the battery is improved.

From the comparison of Examples 7-8 with Example 6, it can be seen that by controlling the ratio of grain sizes of the (100) plane to (001) plane of the precursor material to be greater than or equal to 2.0, the high-temperature cycle capacity retention rate of the battery is increased, and the high-temperature cycle performance of the battery is improved. From the comparison of Example 8 with Examples 6-7, it can be seen that by controlling the ratio of grain sizes of the (100) plane to (001) plane of the precursor material to be greater than or equal to 4.4, the high-temperature cycle capacity retention rate of the battery is further improved, and the high-temperature cycle performance of the battery is improved.

From the comparison of Examples 10-11 with Example 9, it can be seen that by controlling the pore volume of the precursor material to be greater than or equal to 0.02 $cm^3/g$, the capacity of the battery is effectively improved. From the comparison of Example 11 with Examples 9-10, it can be seen that by controlling the pore volume of the precursor material to be greater than or equal to 0.025$cm^3/g$, the capacity of the battery is effectively improved.

From the comparison of Examples 12-13 with Example 14, it can be seen that by adjusting the Dv50 of the precursor material to be in the range of 3-15$\mu$m, the capacity of the battery is improved, and the direct current internal resistance of the battery is reduced.

From the comparison of Examples 10-12 with Example 9, it can be seen that by controlling the specific surface area of the precursor material to be in the range of 4$m^2$/g-20$m^2$/g, the capacity of the battery is effectively improved. From the comparison of Example 11 with Examples 9-10 and 12, it can be seen that by controlling the specific surface area of the precursor material to be in the range of 8$m^2$/g-13$m^2$/g, the capacity and cycle capacity retention rate of the battery are both desirable, to comprehensively improve the performance of the battery. From the comparison of Example 13 with 12/14, it can be seen that by controlling the specific surface area of the precursor material to be in the range of 8$m^2$/g-13$m^2$/g, the capacity and cycle capacity retention rate of the battery are both desirable, to comprehensively improve the performance of the battery.

From Examples 1 and 15-18, it can be seen that by controlling the intensity ratio of diffraction peaks of the (001) plane to (101) plane of the precursor material to be in the range of 0.6-1.25, the battery has high capacity and excellent cycle performance. From the comparison of Examples 1 and 16-17 with Examples 15 and 18, it can be seen that by controlling the intensity ratio of diffraction peaks of the (001) plane to (101) plane of the precursor material to be in the range of 0.9-1.18, the battery has both high capacity and high cycle capacity retention rate, to comprehensively improve the performance of the battery.

The positive electrode material in Examples 1-28 of the present application has a chemical formula of $Li_{c1}Ni_{x1}Co_{y1}Mn_{z1}M1_{a1}O_{2-b1}$, where M includes at least one of Zr, Y, Al, Ti, W, Sr, Ta, Mo, Sb, Nb, Na, K, Ca, Ce, and La, $0.5 \leq c1 < 1.2$, $0.55 \leq x1 < 1.0$, $0 \leq y1 < 0.45$, $0 \leq z1 < 0.45$, $0 < a1 \leq 0.45$, $a1+x1+y1+z1=1$, and $-0.1 \leq d1 < 0.1$. From the comparison of Examples 1-28 with Comparative Examples 1-4, it can be seen that the positive electrode material of the present application can improve the capacity of the battery, reduce the direct current internal resistance of the battery, and improve the high-temperature cycle performance of the battery.

From the comparison of Examples 7-8 with Example 6, it can be seen that by controlling the microstrain of the positive electrode material to be less than or equal to 0.5%, the high-temperature cycle capacity retention rate of the battery is increased, and the high-temperature cycle performance of the battery is improved. From the comparison of Examples 19 and 21 with Example 20, it can be seen that by controlling the microstrain of the positive electrode material to be less than or equal to 0.5%, the high-temperature cycle capacity retention rate of the battery is increased, and the high-temperature cycle performance of the battery is improved. From the comparison of Example 21 with Examples 19 and 20, it can be seen that by controlling the microstrain of the positive electrode material to be less than or equal to 0.2%, the high-temperature cycle capacity retention rate of the battery is further increased, and the high-temperature cycle performance of the battery is improved.

From Examples 1-28, it can be seen that by controlling the aspect ratio of primary particles of the positive electrode material to be 1.5-10, the battery has a high capacity, a small direct current internal resistance and an excellent cycle capacity retention rate, whereby the performance of the battery is comprehensively improved. From the comparison of Examples 1 and 24-25 with Examples 22-23, it can be seen that by controlling the aspect ratio of primary particles of the positive electrode material to be 2-5, the capacity, direct current internal resistance, and cycle capacity retention rate of the battery are all desirable, to improve the performance of the battery comprehensively.

In Comparative Example 3, element Zr, Y, Al, Ti, W, Sr, Ta, Mo, Sb, Nb, Na, K, Ca, Ce or La is not doped in the preparation process of the precursor material, and the number of layers of (101) planes of the generated precursor material is not in the range of 20-70. From Comparative Example 3 and Examples 1-28, it can be seen that by adding element Zr, Y, Al, Ti, W, Sr, Ta, Mo, Sb, Nb, Na, K, Ca, Ce or La in the preparation process of the precursor material, the capacity of the secondary battery is improved, the direct current internal resistance of the battery is reduced, and the high-temperature cycle performance of the battery is improved.

In Comparative Example 4, no surfactant is added in the preparation process of the precursor material, and the number of layers of (101) planes of the generated precursor material is not in the range of 20-70. From Comparative Example 4 and Examples 1-28, it can be seen that by adding the surfactant in the preparation process of the precursor material, the capacity of the secondary battery is improved, the direct current internal resistance of the battery is reduced, and the high-temperature cycle performance of the battery is improved.

It should be noted that the present application is not limited to the embodiments above. The above-described embodiments are merely exemplary, and embodiments having substantially the same technical idea and the same effects within the scope of the technical solution of the present application are all included in the technical scope of the present application. In addition, other embodiments constructed by applying various modifications conceivable to those skilled in the art to the embodiments and combining some of the constituent elements of the embodiments without departing from the scope of the essence of the present application are also included in the scope of the present application.

## Claims

1. A precursor material, having a chemical formula of $Ni_xCo_yMn_zM_a(OH)_2$, wherein element M comprises at least one of Zr, Y, Al, Ti, W, Sr, Ta, Mo, Sb, Nb, Na, K, Ca, Ce, and La, $0.55 \leq x < 1.0$, $0 \leq y < 0.45$, $0 \leq z < 0.45$, $0 < a \leq 0.45$, $a+x+y+z=1$, and the precursor material comprises 20-70 layers of (101) planes.

2. The precursor material according to claim 1, wherein in the chemical formula $Ni_xCo_yMn_zM_a(OH)_2$, $0.90 \leq x < 1.0$, $0 \leq y < 0.10$, $0 \leq z < 0.10$, $0 < a \leq 0.10$, and $a+x+y+z=1$.

3. The precursor material according to claim 1, wherein a number of layers of the (101) plane of the precursor material is 25-55.

4. The precursor material according to any one of claims 1 to 3, wherein a deformation fault probability fD of the precursor material is less than or equal to 7.0%, and optionally less than or equal to 4.0%.

5. The precursor material according to any one of claims 1 to 4, wherein a ratio of grain sizes of the (100) plane to (001) plane of the precursor material is greater than or equal to 2.0, and optionally greater than or equal to 4.4.

6. The precursor material according to any one of claims 1 to 5, wherein a pore volume of the precursor material is greater than or equal to 0.02 $cm^3$/g, and optionally greater than or equal to 0.025 $cm^3$/g.

7. The precursor material according to any one of claims 1 to 6, wherein a Dv50 of the precursor material is 3 μm-15 μm.

8. The precursor material according to any one of claims 1 to 7, wherein a specific surface area of the precursor material is 4 $m^2$/g-20$m^2$/g, and optionally 8 $m^2$/g-13$m^2$/g.

9. The precursor material according to any one of claims 1 to 8, wherein an intensity ratio of diffraction peaks of the (001) plane and (101) plane of the precursor material is 0.60-1.25, and optionally 0.9-1.18.

10. A method for preparing a precursor material, comprising the following steps:

    preparing a precursor material by a co-precipitation reaction, wherein the precursor material has a chemical formula of $Ni_xCo_yMn_zM_a(OH)_2$,

wherein M comprises at least one of Zr, Y, Al, Ti, W, Sr, Ta, Mo, Sb, Nb, Na, K, Ca, Ce, and La, $0.55 \leq x < 1.0$, $0 \leq y < 0.45$, $0 \leq z < 0.45$, $0 < a \leq 0.45$, $a+x+y+z=1$, and the precursor material comprises 20-70 layers of (101) planes.

11. The preparation method according to claim 10, specifically comprising Step (1) and Step (2):

Step (1): con-currently adding a mixed salt solution containing a nickel salt, a cobalt salt and a manganese salt, a precipitant solution, a complexing agent solution and a surfactant into a base reaction solution, carrying out a first co-precipitation reaction, and stopping the reaction after a first target particle size Dv50 is achieved, to obtain a precursor mother liquor; and
Step (2): parallelly adding the precipitant solution, the complexing agent solution and an M salt solution into the precursor mother liquor, carrying out a second co-precipitation reaction, and stopping the reaction after a second target particle size Dv50 is achieved, to obtain the precursor material.

12. The preparation method according to claim 11, wherein the content in percentage by weight of the surfactant added in Step (1) is 0.1%-5%, based on the total weight of the nickel salt, the cobalt salt and the manganese salt in the mixed salt solution.

13. The preparation method according to claim 11 or 12, wherein the surfactant added in Step (1) has a hydrophile-lipophile balance value of greater than 10, and optionally comprises one or more of polyvinylpyrrolidone, triethanolamine oleate, polyoxyethylene oleyl ether, or polyoxyethylene lauryl ether.

14. The preparation method according to any one of claims 11 to 13, wherein the first target particle size Dv50 in Step (1) is 3 $\mu$m-9.5 $\mu$m, and the second target particle size Dv50 in Step (2) is 3 $\mu$m-15 $\mu$m.

15. The preparation method according to any one of claims 11 to 14, wherein the reaction temperature of the first co-precipitation reaction in Step (1) is 65-85°C, and the reaction temperature of the second co-precipitation reaction in Step (2) is 65-85°C.

16. The preparation method according to any one of claims 11 to 15, wherein the pH value of the first co-precipitation reaction in Step (1) is 8.5-11.5, and the pH value of the second co-precipitation reaction in Step (2) is 8.5-11.5.

17. The preparation method according to any one of claims 11 to 16, wherein the molar concentration of the complexing agent in the first co-precipitation reaction system in Step (1) is 0.5-1 mol/L, and the molar concentration of the complexing agent in the second co-precipitation reaction system in Step (2) is 0.5-1 mol/L.

18. The preparation method according to any one of claims 11 to 17, wherein the molar concentration of the M salt solution in Step (1) is 1-5mol/L; the molar concentration of the precipitant solution added in Step (1) is 1-10 mol/L; the molar concentration of the precipitant solution added in Step (2) is 1-10 mol/L; and the molar concentration of the M salt solution in Step (2) is 0.5-1 mol/L.

19. Use of the precursor material according to any one of claims 1 to 9 or the precursor material prepared by the preparation method according to any one of claims 10 to 18 in the preparation of a positive electrode material.

20. A positive electrode material, prepared with the precursor material according to any one of claims 1 to 9 or the precursor material prepared by the preparation method according to any one of claims 10 to 18.

21. The positive electrode material according to claim 20, wherein the positive electrode material meets Formula (I) or Formula (II),

$$Li_{c1}Ni_{x1}Co_{y1}Mn_{z1}M1_{a1}O_{2-d1}, \qquad \text{Formula (I);}$$

$$Li_{c2}Ni_{x2}Co_{y2}Mn_{z2}M1_{a2}M2_{e}O_{2-d2}, \qquad \text{Formula (II);}$$

wherein M1 and M2 each independently comprise at least one of Zr, Y, Al, Ti, W, Sr, Ta, Mo, Sb, Nb, Na, K, Ca, Ce, and La, $0.5 \leq c1 < 1.2$, $0.55 \leq x1 < 1.0$, $0 \leq y1 < 0.45$, $0 \leq z1 < 0.45$, $0 < a1 \leq 0.45$, $a1+x1+y1+z1=1$, and $-0.1 \leq d1 < 0.1$; and $0.5 \leq c2 < 1.2$, $0.55 \leq x2 < 1.0$, $0 \leq y2 < 0.45$, $0 \leq z2 < 0.45$, $0 < a2 \leq 0.45$, $0 < a2 \leq 0.45$, $0 < e \leq 0.45$, $a2+x2+y2+z2+e=1$, and $-0.1 \leq d2 < 0.1$.

**22.** The positive electrode material according to claim 20 or 21, wherein a microstrain of the positive electrode material is less than or equal to 0.5%, and optionally less than or equal to 0.2%.

**23.** The positive electrode material according to any one of claims 21 and 22, wherein an aspect ratio of primary particles of the positive electrode material is 1.5-10, and optionally 2-5.

**24.** A positive electrode sheet, comprising the positive electrode material according to any one of claims 20 to 23.

**25.** A secondary battery, comprising the positive electrode sheet according to claim 24.

**26.** A power consuming apparatus, comprising the secondary battery according to claim 25.

5

FIG. 1

5

53

52
52

51

FIG. 2

4    5    5

5

FIG. 3

FIG. 4

FIG. 5

FIG. 6

## INTERNATIONAL SEARCH REPORT

| International application No. |
| --- |
| **PCT/CN2023/089600** |

| A. | CLASSIFICATION OF SUBJECT MATTER |
| --- | --- |

C01G53/04(2006.01)i

According to International Patent Classification (IPC) or to both national classification and IPC

| B. | FIELDS SEARCHED |
| --- | --- |

Minimum documentation searched (classification system followed by classification symbols)

IPC:C01G

Documentation searched other than minimum documentation to the extent that such documents are included in the fields searched

Electronic data base consulted during the international search (name of data base and, where practicable, search terms used)

CNABS, CNTXT, VEN, WOTXT, USTXT, EPTXT, CNKI, Web of science: 宁德时代, 沈重亨, 桓书星, 吴昌栩, 陈强, 柳娜, 三元, 正极材料, 镍钴锰, NCM, (001), 晶面, 层数, ternary, positive materials, nickel cobalt manganese, facet, crystal plane, layer

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 115140783 A (SUQIAN XIANGYING NEW ENERGY TECHNOLOGY CO., LTD.) 04 October 2022 (2022-10-04) description, paragraphs [0003]-[0042] | 1-26 |
| A | CN 115403074 A (XIANGTAN UNIVERSITY) 29 November 2022 (2022-11-29) entire document | 1-26 |
| A | CN 115838189 A (CONTEMPORARY AMPEREX TECHNOLOGY CO., LTD.) 24 March 2023 (2023-03-24) entire document | 1-26 |
| A | CN 113023791 A (SHAANXI COAL CHEMICAL INDUSTRY TECHNOLOGY RESEARCH INSTITUTE CO., LTD.) 25 June 2021 (2021-06-25) entire document | 1-26 |
| A | CN 114275825 A (SVOLT ENERGY TECHNOLOGY CO., LTD.) 05 April 2022 (2022-04-05) entire document | 1-26 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 November 2023** | **17 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/089600**

**C.**    **DOCUMENTS CONSIDERED TO BE RELEVANT**

| Category* | Citation of document, with indication, where appropriate, of the relevant passages | Relevant to claim No. |
|---|---|---|
| A | JP 2019153567 A (SUMITOMO METAL MINING CO., LTD.) 12 September 2019 (2019-09-12)<br>entire document | 1-26 |

Form PCT/ISA/210 (second sheet) (July 2022)

**INTERNATIONAL SEARCH REPORT**
Information on patent family members

International application No.

**PCT/CN2023/089600**

| Patent document cited in search report | | | Publication date (day/month/year) | Patent family member(s) | | | Publication date (day/month/year) |
|---|---|---|---|---|---|---|---|
| CN | 115140783 | A | 04 October 2022 | None | | | |
| CN | 115403074 | A | 29 November 2022 | None | | | |
| CN | 115838189 | A | 24 March 2023 | WO | 2023040358 | A1 | 23 March 2023 |
| CN | 113023791 | A | 25 June 2021 | None | | | |
| CN | 114275825 | A | 05 April 2022 | None | | | |
| JP | 2019153567 | A | 12 September 2019 | JP | 2022095969 | A | 28 June 2022 |
| | | | | JP | 7338133 | B2 | 05 September 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB T2165022008 A
- GB T190772016 A
- GB T195872017 A